(19) Europäisches Patentamt
European Patent Office
Office européen des brevets

(11) EP 4 302 379 B1

(12) # EUROPEAN PATENT SPECIFICATION

(45) Date of publication and mention of the grant of the patent:
**30.10.2024 Bulletin 2024/44**

(21) Application number: **22713355.0**

(22) Date of filing: **03.03.2022**

(51) International Patent Classification (IPC):
***H02J 3/32*** *(2006.01)* ***H02J 9/00*** *(2006.01)*
***H02J 7/00*** *(2006.01)* ***H02J 7/02*** *(2016.01)*

(52) Cooperative Patent Classification (CPC):
**H02J 3/32; H02J 7/00032; H02J 7/0048; H02J 7/007; H02J 7/02; H02J 9/00**

(86) International application number:
**PCT/EP2022/055379**

(87) International publication number:
**WO 2022/184816 (09.09.2022 Gazette 2022/36)**

(54) **A POWER BALANCING RESERVE FOR AN ELECTRICAL GRID**
LEISTUNGSAUSGLEICHSRESERVE FÜR EIN STROMNETZ
RÉSERVE D'ÉQUILIBRAGE DE PUISSANCE POUR UN RÉSEAU ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.03.2021 FI 20215235**

(43) Date of publication of application:
**10.01.2024 Bulletin 2024/02**

(73) Proprietor: **SYMPOWER B.V.**
**1011 TD Amsterdam (NL)**

(72) Inventors:
- **SAARI, Jarmo**
**20750 TURKU (FI)**
- **KARLSSON, Oscar**
**20100 TURKU (FI)**

(74) Representative: **Berggren Oy**
**P.O. Box 16**
**Eteläinen Rautatiekatu 10A**
**00101 Helsinki (FI)**

(56) References cited:
**EP-A1- 2 139 090** **US-A1- 2020 259 358**
**US-B2- 10 424 945**

- **HOLLINGER RAPHAEL ET AL: "Fast Frequency Response with BESS: A Comparative Analysis of Germany, Great Britain and Sweden", 2018 15TH INTERNATIONAL CONFERENCE ON THE EUROPEAN ENERGY MARKET (EEM), IEEE, 27 June 2018 (2018-06-27), pages 1 - 6, XP033407277, DOI: 10.1109/EEM.2018.8469998**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The example and non-limiting embodiments of the present invention relate to provision of a power balancing reserve for an electrical grid.

### BACKGROUND

An electrical grid, especially a large one such as a national or a transnational electrical grid requires careful control in order to balance the electricity production from generating stations to the grid and the electricity consumption from the grid by consumers: electricity production to the grid needs to match the electricity consumption from the grid in order to keep the grid operational, whereas in a practical situation instantaneous electricity production and electricity consumption do not fully match each other.

In general, in a balanced condition of the grid the frequency of alternating current (AC) transferred via the grid remains at a nominal system frequency, which e.g. in the European electrical grids is typically 50 Hz, whereas any imbalance between the production and consumption results in a small deviation from the nominal system frequency: in case the consumption exceeds the production (i.e. the grid is heavily loaded) the AC frequency in the grid falls below the nominal system frequency, whereas in case the production exceeds the consumption (i.e. the grid is lightly loaded) the AC frequency in the grid raises above the nominal system frequency. Since exact balancing of instantaneous production and consumption in a complex network is practically impossible, a minor deviation between the nominal system frequency and the AC frequency of the grid is typically allowed while still considering the grid to be in a normal operational state. As an example, assuming the nominal system frequency of 50 Hz, the AC frequency of the grid may be allowed to vary between 49.9 and 50.1 Hz while still considering the grid to be in the normal operational state.

Typically, the grid operator aims at ensuring balance in the grid via planning the production and consumption within the network in advance, for example, on a daily basis and/or an hourly basis, e.g. via agreements made with entities producing and consuming electric power. Nevertheless, in a real-life environment the electricity production and consumption do not fully match the planned/agreed ones and, consequently, the AC frequency of the grid involves temporary deviations from the nominal system frequency on regular basis despite any planning. In this regard, a known technique for facilitating balance in the grid in such circumstances involves usage of a power balancing reserve (PBR) that is able to increase or decrease its planned power supply to or power demand from the grid in dependence of the AC frequency of the grid.

Depending on the type of provided PBR function, a PBR entity may carry out one or both of the following:

- in case the AC frequency of the grid drops below a (first) predefined threshold (that is lower than or equal to the nominal system frequency), the PBR entity may decrease its power consumption in order to contribute towards decreasing the load of the grid (to account for a situation where the consumption exceeds the production),
- in case the AC frequency of the grid rises above a (second) predefined threshold (that is higher than or equal to the nominal system frequency), the PBR entity may increase its power consumption in order to contribute towards increasing the load of the grid (to account for a situation where the production exceeds the consumption).

The operation of the PBR entity needs to be carefully controlled in order to ensure providing a required power balancing function for the grid also over a prolonged period of time. As examples in this regard, the requirement for the power balancing function may arise from current operational state of the grid (e.g. in terms of the AC frequency of the grid deviating from the nominal system frequency) and/or from any regulations or agreements concerning the power consumed by the PBR entity and changes thereof over time. Consequently, controlling operation of the PBR entity such that all relevant technical and regulatory requirements are met requires careful design. In contrast, a failure to meet such requirements may result in compromised operation of the grid or even in disturbances in supply of electrical energy via the grid.

In related art, Hollinger, Raphael et al., "Fast Frequency Response with BESS: A Comparative Analysis of Germany, Great Britain and Sweden", 15th IEEE International Conference on the European Energy Market (EEM), 27 June 2018, pages 1-6 provides an analysis of provision of fast frequency response with BESS (Battery Energy Storage Systems) in Germany, Great Britain and Sweden.

### SUMMARY

It is an object of the present invention to provide a technique for controlling a power balancing reserve for an electrical grid in a manner that enables providing continuous power balancing operation over a prolonged time period. According to an embodiment, a power balancing reserve (PBR) apparatus for an electrical grid is provided, the PBR apparatus comprising: an energy storage for storing electrical energy and having a minimum allowable state of charge, SoC, level and a maximum allowable SoC level defined therefor; and a controller for controlling transfer of electrical energy between the energy storage and the electrical grid in dependence of an observed AC frequency of the electrical grid in view of said minimum and maximum allowable SoC levels using one of a plurality of operating modes via adjustment of an instantaneous charging power that indicates the amount of electric power currently transferred from the electrical grid to the energy storage, the controller arranged to: receive, before starting a first time period respective indications of a first operating mode selected for the first time period and a second operating mode selected for a second time period, where the first and second time periods are consecutive time periods in a sequence of time periods of predefined duration and where the second time period follows the first time period in said sequence, and control the instantaneous charging power during the first time period in accordance with one or more power adjustment rules defined for the first operating mode, wherein said controlling is carried out according to a predefined schedule and in dependence of said observed AC frequency, wherein the controller is further arranged to: define, before starting the first time period, a target state of charge, SoC, level of the energy storage for the end of the first time period at least partially in dependence of the second operating mode selected for the second time period; derive, before starting the first time period, a first nominal charging power for the first time period at least in dependence of an initial SoC level of the energy storage in the beginning of the first time period and said target SoC level; and control, during the first time period according to said predefined schedule, the instantaneous charging power during the first time period in view of the first nominal charging power in accordance with the one or more charging power adjustment rules defined for the first operating mode.

According to another embodiment, a method for providing a power balancing reserve (PBR) for an electrical grid is provided, the method comprising: storing electrical energy in an energy storage that has a minimum state of charge, SoC, level and a maximum SoC level defined therefor; controlling transfer of electrical energy between the energy storage and the electrical grid in dependence of an observed AC frequency of the electrical grid in view of said minimum and maximum allowable SoC levels using one of a plurality of operating modes via adjustment of an instantaneous charging power that indicates the amount of electric power currently transferred from the electrical grid to the energy storage; receiving, before starting a first time period, respective indications of a first operating mode selected for the first time period and a second operating mode selected for a second time period, where the first and second time periods are consecutive time periods in a sequence of time periods of predefined duration and where the second time period follows the first time period in said sequence; and controlling the instantaneous charging power during the first time period in accordance with one or more power adjustment rules defined for the first operating mode, wherein said controlling is carried out according to a predefined schedule and in dependence of said observed AC frequency, wherein said controlling comprises: defining, before starting the first time period, a target state of charge, SoC, level of the energy storage for the end of the first time period at least partially in dependence of the second operating mode selected for the second time period; deriving, before starting the first time period, a first nominal charging power for the first time period at least in dependence of an initial SoC level of the energy storage in the beginning of the first time period and said target SoC level; and controlling, during the first time period according to said predefined schedule, the instantaneous charging power during the first time period in view of the first nominal charging power in accordance with the one or more charging power adjustment rules defined for the first operating mode.

According to another embodiment, a computer program for measuring wind speed is provided, the computer program comprising computer readable program code configured to cause performing at least the method according to the embodiment described in the foregoing when said program code is executed on one or more computing apparatuses.

The computer program according to the above-described example embodiment may be embodied on a volatile or a non-volatile computer-readable record medium, for example as a computer program product comprising at least one computer readable non-transitory medium having the program code stored thereon, which, when executed by one or more computing apparatuses, causes the computing apparatuses at least to perform the method according to the example embodiment described in the foregoing.

The exemplifying embodiments of the invention presented in this patent application are not to be interpreted to pose limitations to the applicability of the appended claims. The verb "to comprise" and its derivatives are used in this patent application as an open limitation that does not exclude the existence of also unrecited features. The features described hereinafter are mutually freely combinable unless explicitly stated otherwise.

Some features of the invention are set forth in the appended claims. Aspects of the invention, however, both as to its construction and its method of operation, together with additional objects and advantages thereof, will be best understood from the following description of some example embodiments when read in connection with the accompanying drawings.

## BRIEF DESCRIPTION OF FIGURES

The embodiments of the invention are illustrated by way of example, and not by way of limitation, in the figures of the accompanying drawings, where

Figure 1 illustrates a block diagram of some logical elements coupled to an electrical grid according to an example;

Figure 2 illustrates a block diagram of some logical elements of a power balancing reserve system according to an example;

Figure 3 illustrates a method according to an example;

Figure 4A illustrates a relationship between an observed AC frequency of an electrical grid, an instantaneous charging power applied for transferring electrical energy from the electrical grid to an energy storage and a state of charge level of the energy storage according to an example;

Figure 4B illustrates a relationship between an observed AC frequency of an electrical grid, an instantaneous charging power applied for transferring electrical energy from the electrical grid to an energy storage and a state of charge level of the energy storage according to an example;

Figure 5 illustrates a relationship between an observed AC frequency of an electrical grid, an instantaneous charging power applied for transferring electrical energy from the electrical grid to an energy storage and a state of charge level of the energy storage according to an example;

Figure 6 illustrates a relationship between an observed AC frequency of an electrical grid, an instantaneous charging power applied for transferring electrical energy from the electrical grid to an energy storage and a state of charge level of the energy storage according to an example;

Figure 7 illustrates a method according to an example; and

Figure 8 illustrates a block diagram of some components of an apparatus according to an example.

## DESCRIPTION OF SOME EMBODIMENTS

Figure 1 illustrates a block diagram of some logical elements that are coupled to an electrical grid 100 according to an example. The electrical grid 100 comprises an interconnected network that enables transfer and distribution of electric power from producers to consumers. In the example of Figure 1, the electrical grid 100 has coupled thereto power producer entities 102-1, 102-2, 102-3 for generation of electric power for delivery via the electrical grid 100 and power consumer entities 104-1, 104-2, 104-3 for consuming the electric power generated by the power producer entities 102-1, 102-2, 102-3. In this regard the power producer entities 102-1, 102-2, 102-3 represent a plurality of power producer entities and the power consumer entities 104-1, 104-2, 104-3 represent a plurality of power consumer entities. In the example of Figure 1 the electrical grid 100 further has a power balancing reserve (PBR) system 110 coupled thereto, which operates to one of supply electrical power to the electrical grid 100 or consume electrical power from the electrical grid 100 in dependence of an observed AC frequency $f(t)$ of the electrical grid 100 in order to contribute towards balancing the state of the electrical grid 100. The PBR system 110 represents one or more PBR systems that may be coupled to the electrical grid 100. Hence, a power balancing functionality results from concurrent operation of a plurality of PBR systems 110 that are coupled to the electrical grid 100 and that operate to adjust their respective power supply to the electrical grid 100 and/or power demand from the electrical grid 100 in dependence of the observed AC frequency $f(t)$ of the grid with the aim of brining the observed AC frequency $f(t)$ towards a nominal system frequency $f_{mid}$ of the electrical grid 100.

The plurality of power producer entities may comprise respective power stations or power plants for production of electric power while the plurality power consumer entities may comprise any industrial, commercial and/or private establishment that consume the electric power. The electrical grid 100 may be alternatively referred to as an electric grid, as a power grid or, simply, just as a grid. The electrical grid 100 may be provided for transfer and distribution of alternating current (AC) at a predefined nominal system frequency $f_{mid}$, which may be, for example, 50 Hz (e.g. in Europe) or 60 Hz (e.g. in the United States). Along the lines described in the foregoing, in the course of operation of the electrical grid 100 the actual AC frequency in the electrical grid 100 may serve as an indication of the operational state of the electrical grid 100: observed AC frequency $f(t)$ that is below the nominal system frequency $f_{mid}$ serves as an indication of a condition where the (overall) power consumption from the electrical grid 100 exceeds the power supply to the electrical grid 100, whereas observed AC frequency $f(t)$ that is above the nominal system frequency $f_{mid}$ serves as an indication of a condition where the (overall) power supply to the electrical grid 100 exceeds the power consumption from the electrical grid 100.

As further described in the foregoing, the electrical grid 100 may be considered to be in a normal operational state even though the observed AC frequency $f(t)$ differs from the nominal system frequency $f_{mid}$ of the electrical grid 100. In this regard, a range of AC frequencies around the nominal system frequency $f_{mid}$ of the electrical grid 100 that are considered to represent the normal operational state of the electrical grid 100 may be referred to as a nominal system frequency range, which may cover frequencies from $f_{lo}$ to $f_{hi}$, where $f_{lo} < f_{mid}$ and $f_{hi} > f_{mid}$. Hence, an observed AC frequency $f(t)$ that is within the nominal system frequency range serves to indicate the normal operational state of the electrical grid 100, whereas an observed AC frequency $f(t)$ that is outside the nominal system frequency range may be considered as a disturbance state (or an abnormal operational state) of the electrical grid 100. The nominal system frequency range may be defined, for example, by an operator of the electrical grid 100 and/or it may be set based at least in part on applicable regulatory requirements (e.g. ones applicable in the geographical location at which the electrical grid 100 is operated). In a non-limiting example, assuming the nominal system frequency $f_{mid}$ of 50 Hz, the nominal system frequency range may extend from 49.9 Hz to 50.1 Hz.

Figure 2 illustrates a block diagram of some logical elements of a PBR apparatus 120 that may serve as the PBR apparatus 110 shown the example of Figure 1. In the example of Figure 2, the PBR apparatus 120 is shown with an energy storage 121 for receiving and supplying electric power and a controller 122 for controlling transfer of electric power from the electrical grid 100 to the energy storage 121 and/or transfer of electric power from the energy storage 121 to the electrical grid 100. Hence, the energy storage 121 comprises a rechargeable energy storage, such as a single rechargeable battery or a battery system comprising two or more rechargeable batteries. The controller 122 may selectively control or adjust the transfer of electric power between the energy storage 121 and the electrical grid 100. In this regard, the supply of electric power from the energy storage 121 to the electrical grid 100 may be referred to as discharging the energy storage 121 and the PBR apparatus 120 may be considered to be in a discharging state when discharging electrical power from the energy storage 121 to the electrical grid 100. Along similar lines, the supply of electric power from the electrical grid 100 to the energy storage 121 may be referred to as charging the energy storage 121 and the PBR apparatus 120 may considered to be in a charging state when the energy storage 121 is receiving electrical power from the electrical grid 100. Moreover, in case no discharging or charging of the energy storage 121 is taking place, the PBR apparatus 120 may be considered to be in an idle state.

The amount of electric power transfer between the energy storage 121 and the electrical grid 100 may be indicated as an instantaneous charging power $P_{in}(t)$, which may be changed over time by the controller 122. In this regard, positive values of the instantaneous charging power $P_{in}(t)$ indicate charging of the energy storage 121 using electric power drawn from the electrical grid 100, whereas negative values of the instantaneous charging power $P_{in}(t)$ indicate discharging electric power from the energy storage 121 to the electrical grid 100. Consequently, a related measure is an instantaneous discharging power $P_{out}(t) = -P_{in}(t)$, for which a positive value indicates discharging electric power from the energy storage 121 to the electrical grid 100 and a negative value indicates charging of the energy storage 121 using electric power drawn from the electrical grid 100.

For notational convenience, in the following the transfer of electric power between the electrical grid 100 and the energy storage 121 is predominantly described via referring to the instantaneous charging power $P_{in}(t)$, regardless of the transfer of electric power involving charging or discharging of the energy storage 121. Consequently, depending on a currently applied instantaneous charging power $P_{in}(t)$, the aspect of decreasing the instantaneous charging power $P_{in}(t)$ may comprise one of the following:

- Continue to operate the PBR apparatus 120 in the charging state but apply a decreased instantaneous charging power $P_{in}(t)$ (i.e. charge at reduced charging rate);
- Continue to operate the PBR apparatus 120 in the discharging state but apply an increased instantaneous discharging power $P_{out}(t)$ (i.e. discharge at an increased discharging rate);
- Switch from operating the PBR apparatus 120 in the charging state to operating the PBR apparatus 120 in the discharging state.

Along similar lines, depending on a currently applied instantaneous charging power $P_{in}(t)$, the aspect of increasing the instantaneous charging power $P_{in}(t)$ may comprise one of the following:

- Continue to operate the PBR apparatus 120 in the discharging state at a decreased instantaneous discharging power $P_{out}(t)$ (i.e. discharge at a reduced discharging rate);
- Continue to operate the PBR apparatus 120 in the charging state at an increased instantaneous charging power $P_{in}(t)$ (i.e. charge at an increased charging rate);
- Switch from operating the PBR apparatus 120 in the discharging state to operating the PBR apparatus 120 in the charging state.

The relative amount of electrical energy currently stored in the energy storage 121 may be indicated via its state of charge (SoC), in other words an SoC level $C(t)$ of the energy storage may be applied to indicate the amount of electrical energy currently stored in the energy storage 121. The SoC level $C(t)$ may be expressed, for example, as a percentage of the predefined overall capacity of the energy storage 121 and/or as an absolute amount of electrical energy available in the energy storage 121 (e.g. as kilowatt-hours (kWh)). In the following examples any measures related to the SoC of the energy storage 121 are predominantly referred to as respective percentages of the overall capacity of the energy storage 121, while these examples readily translate into ones that consider respective measures using a measure of electrical energy such as kWh. The energy storage 121 may have an allowable range of SoC levels (allowable SoC range in short) assigned therefor, whereas the controller 122 may be arranged to ensure controlling the charging and discharging of the energy storage 121 such that the SoC level $C(t)$ of the energy storage 121 remains within the allowable SoC range. The allowable SoC range may be defined via a pair of a lower SoC limit $C_{min}$ and an upper SoC limit $C_{max}$, which may be alternatively referred to as a minimum allowable SoC level $C_{min}$ and a maximum allowable SoC level $C_{max}$, respectively. In various examples, the lower SoC limit $C_{min}$ may be 0% or a non-zero value that is less than the upper SoC limit $C_{max}$, whereas the upper SoC limit $C_{max}$ may be 100 % or a value that is lower than 100 % but larger than the lower SoC limit $C_{min}$. In a further non-limiting example pertaining to using one or more rechargeable batteries to provide the energy storage 121, the lower SoC limit $C_{min}$ may be in a range from 3 to 10 %, e.g. 6 % and the upper SoC limit $C_{max}$ may be in a range from 85 % to 95 %, e.g. 89 %. The lower SoC limit $C_{min}$ that is above zero and the upper SoC limit $C_{max}$ that is below 100 % may be set due to physical characteristics of the battery in order to increase battery life and/or to ensure sufficient charging/discharging rate throughout the allowable SoC range.

In a first scenario, the PBR apparatus 120 may be arranged to operate in a single operating mode during a plurality of consecutive time periods of a time schedule such that one or more operating parameters of the PBR apparatus 120 are fixed throughout a time period but they may be changed from one time period to another. In this regard, respective values of a first subset of the one or more operating parameters may be selected in advance for the plurality of time periods and/or respective values of a second subset of the one or more operating parameters may be set upon starting the respective time period (or upon completing the time period preceding the respective time period). The time schedule hence consists of a sequence of time periods and the time periods of the time schedule preferably have a fixed predefined duration that is the same from one time period to another. In an example, the time schedule may comprise a given day and the plurality of time periods therein may comprise respective time portions of the given day, e.g. the hours of the given day or the half-an-hour periods of the given day). The pre-selection of the time periods of the time schedule for application of the single operation mode of the PBR apparatus 120 using the respective parameter value(s) may be based, for example, on an agreement between respective operators of the PBR apparatus 120 and the electrical grid 100.

As an example, the single operating mode of the first scenario may be one where the controller 122 is arranged to operate the PBR apparatus 120 to provide a frequency containment reserve (FCR) function via adjusting the instantaneous charging power $P_{in}(t)$ in dependence of the observed AC frequency $f(t)$ of the electrical grid 100, e.g. in dependence of a difference between the observed AC frequency $f(t)$ of the electrical grid 100 and the nominal system frequency $f_{mid}$ of the electrical grid 100 in view of the allowable SoC range in order to facilitate keeping the AC frequency $f(t)$ of the electrical grid 100 at or close to the nominal system frequency $f_{mid}$ when the electrical grid 100 is in its normal operational state. Without losing generality, the FCR function according to such an operating mode may be referred to as a FCR function for normal operational state of the electrical grid 100 (FCR-N function) and, consequently, this operating mode may be referred to as a FCR-N mode of the PBR apparatus 120.

According to an example, operation of the PBR apparatus 120 in the FCR-N mode may be limited to conditions where the observed AC frequency $f(t)$ of the electrical grid 100 remains within the nominal system frequency range (e.g. the range from 49.9 Hz to 50.1 Hz in case of the 50 Hz nominal system frequency $f_{mid}$). Consequently, according to an example, in case the observed AC frequency $f(t)$ of the electrical 100 is outside the nominal system frequency range, the controller 122 may terminate the FCR-N function for the remainder of the current time period. In another example, the controller 122 may discontinue the FCR-N function for a sub-period within the current time period when the observed AC frequency $f(t)$ is outside the nominal system frequency range but continue the FRC-N function when the observed AC frequency $f(t)$ is (again) within the nominal system frequency range. In a further example, the PBR apparatus 120 may continue providing the FCR function according to the FCR-N mode also when the observed AC frequency $f(t)$ is outside the nominal system frequency range.

The one of more operating parameters of the PBR apparatus 120 for a time period $k$ in the FCR-N mode may comprise the following:

- a nominal charging power $P_{in_mid,k}$ (or a nominal discharging power $P_{out_mid,k} = -P_{in_mid,k}$);
- a maximum allowable charging power $P_{in_max,k}$ (or a minimum allowable discharging power $P_{out_min,k} = -P_{in_max,k}$);
- a minimum allowable charging power $P_{in_min,k}$ (or a maximum allowable discharging power $P_{out_max,k} = -P_{in_min,k}$).

In the FCR-N mode, the nominal charging power $P_{in_mid,k}$ for the time period $k$ may be considered as a virtual midpoint charging power or as a default charging power for the respective time period, which is applied as the instantaneous charging power $P_{in}(t)$ in a situation where the observed AC frequency $f(t)$ of the electrical grid 100 matches or substantially matches the nominal system frequency $f_{mid}$ of the electrical grid 100. In contrast, when the observed AC frequency $f(t)$ fails to match the nominal system frequency $f_{mid}$, the instantaneous charging power $P_{in}(t)$ may be adjusted accordingly in view of the minimum allowable charging power $P_{in_min,k}$ and the maximum allowable charging power $P_{in_max,k}$ set for the time period $k$. In this regard, the controller 122 may be arranged to set (e.g. to keep or adjust) the instantaneous charging power $P_{in}(t)$ in dependence of the difference with between the observed AC frequency $f(t)$ of the electrical grid 100 and the nominal system frequency $f_{mid}$ of the electrical grid 100, for example, according to one or more of the following charging power adjustment rules:

- Set (e.g. keep or adjust) the instantaneous charging power $P_{in}(t)$ to the nominal charging power $P_{in_mid,k}$ in response to the observed AC frequency $f(t)$ matching or substantially matching the nominal system frequency $f_{mid}$.
- Set (e.g. keep or adjust) the instantaneous charging power $P_{in}(t)$ to a value that is smaller than the nominal charging power $P_{in_mid,k}$ in response to the observed AC frequency $f(t)$ being smaller than the nominal system frequency $f_{mid}$.
- Set (e.g. keep or adjust) the instantaneous charging power $P_{in}(t)$ to a value that is larger than the nominal charging power $P_{in_mid,k}$ in response to the observed AC frequency $f(t)$ exceeding the nominal system frequency $f_{mid}$.

In the FCR-N mode, the controller 122 setting or adjusting the instantaneous charging power $P_{in}(t)$ in view of the allowable SoC range may comprise the controller 122 controlling discharging or charging of the energy storage 121 (whichever currently applies) such that the SoC level $C(t)$ is kept within the allowable SoC range: the discharging may be continued until reaching the lower SoC limit $C_{min}$ or the charging the energy storage 121 may be continued until reaching the upper SoC limit $C_{max}$, whichever currently applies. Hence, in case the lower SoC limit $C_{min}$ is reached while discharging the energy storage 121 or in case the upper SoC limit $C_{max}$ is reached while charging the energy storage 121, the controller 122 may terminate the discharging/charging and set the PBR apparatus 120 in the idle sate.

The minimum allowable charging power $P_{in_min,k}$ and the maximum allowable charging power $P_{in_max,k}$ for the time period $k$, may be defined in relation to the nominal charging power $P_{in_mid,k}$ defined or set for the time period $k$. According to an example, the maximum allowable charging power $P_{in_max,k}$ and the minimum allowable charging power $P_{in_min,k}$ may be set symmetrically with respect to the nominal charging power $P_{in_mid,k}$ in view of a balancing reserve power $P_{in_res,k}$ assigned for the current time period $k$, e.g. such that the allowable range of charging powers from the minimum allowable charging power $P_{in_min,k}$ to the maximum allowable charging power $P_{in_max,k}$ are set as $P_{in_min,k} = P_{in_mid,k} - P_{in_res,k}$ and $P_{in_max,k} = P_{in_mid,k} + P_{in_res,k}$. In another example, the maximum allowable charging power $P_{in_max,k}$ and the minimum allowable charging power $P_{in_min,k}$ may be set asymmetrically with respect to the nominal charging power $P_{in_mid,k}$ in view of respective upper and lower balancing reserve powers $P_{in_res_hi,k}$, $P_{in_res_lo,k}$, e.g. such that $P_{in_min,k} = P_{in_mid,k} - P_{in_res_lo,k}$ and $P_{in_max,k} = P_{in_mid,k} + P_{in_res_hi,k}$ with $P_{in_res_lo,k} \neq P_{in_res_hi,k}$. Herein, the balancing reserve powers $P_{in_res,k}$, $P_{in_res_hi,k}$, $P_{in_res_lo,k}$ (as applicable) may be respective predefined values, set or defined for example based on the agreement between respective operators of the PBR apparatus 120 and the electrical grid 100.

According to an example, the nominal charging power $P_{in_mid,k}$ for the time period $k$ may be defined (e.g. derived) in the course of operation of the PBR apparatus 120 in consideration of one or more of the following aspects:

- the SoC level $C(t)$ in the beginning of the time period $k$, denoted as an initial SoC level $C_{st,k}$,
- a target value for the SoC level $C(t)$ at the end of the time period $k$, denoted as a target SoC level $C_{tgt,k}$,
- an estimated net amount of electrical energy to be transferred from the electrical grid 100 to the energy storage 121 in the course of the time period $k$ for the purpose of power balancing, and
- the allowable SoC range.

Herein, the net amount of electrical energy to be transferred from the electrical grid 100 to the energy storage 121 in the course of the time period $k$ for the purpose of power balancing serves to indicate the difference between the amount of electrical energy transferred from the electrical grid 100 to the energy storage 121 and the amount of electrical energy transferred from the energy storage 121 to the electrical grid 100 during the time period $k$ for power balancing purposes. This amount of electrical energy may be referred to, in short, as an estimated balancing energy $E_{est,k}$ (required for the time period k). Hence, in case the estimated balancing energy $E_{est,k}$ is above zero, the estimated net effect of energy transfer between the electrical grid 100 and the energy storage 121 due to the power balancing functionality over the time period $k$ results in increasing the SoC level $C(t)$ of the energy storage 121, in case the estimated balancing energy $E_{est,k}$ is below zero, the estimated net effect of energy transfer between the electrical grid 100 and the energy storage 121 due to the power balancing functionality over the time period $k$ results in decreasing the SoC level $C(t)$ of the energy storage 121, and in case the estimated balancing energy $E_{est,k}$ is zero, the estimated net effect of the energy transfer between the electrical grid 100 and the energy storage 121 due to the power balancing functionality over the time period $k$ is assumed not the change the SoC level of the energy storage 121. The estimated balancing energy $E_{est,k}$ may be also considered as or it may be translated into an (estimated) average charging power $P_{in_est,k}$ required for the power balancing functionality over the time period $k$, e.g. as $P_{in_est,k} = E_{est,k} / t_k$.

The nominal charging power $P_{in_mid,k}$ for the time period $k$ may be derived upon starting the time period $k$ with the aim of facilitating continued provision of the FCR-N function throughout the time period $k$ and possibly also in the subsequent time periods(s). In this regard, an advantageous starting point for any time period of operation in the FCR-N mode in terms of the initial SoC level $C_{st,k}$ is a midpoint SoC level $C_{mid}$ between the lower SoC

limit $C_{min}$ and the upper SoC limit $C_{max}$, which may be derived e.g. as an average of the upper SoC limit $C_{max}$ and the lower SoC limit $C_{min}$, e.g. $C_{mid} = (C_{max} + C_{min}) / 2$, since it enables equal amount of charging or discharging of the energy storage 121 to be applied while keeping the SoC level $C(t)$ within the allowable SoC range. Consequently, if assuming operation of the PBR apparatus 120 in the FCR-N mode also for the time period $k+1$, an advantageous value for the target SoC level $C_{tgt,k}$ at the end of the time period $k$ may comprise the midpoint SoC level $C_{mid}$. In a non-limiting example that assumes the upper SoC limit at $C_{max}$ = 89 % and the lower SoC limit at $C_{min}$ = 6 %, the midpoint SoC level $C_{mid}$ sets to $C_{mid}$ = (89 % + 6 %) / 2 = 47.5 %. Thus, if further assuming the energy storage 121 to have an overall capacity of 1000 kWh, this translates into the lower SoC limit $C_{max}$ at 60 kWh, the upper SoC limit $C_{max}$ at 890 kWh and the midpoint SoC level $C_{max}$ at 475 kWh.

As an example, assuming that the estimated balancing energy $E_{est,k}$ is zero (i.e. the amount of electrical energy transferred from the energy storage 121 to the electrical grid 100 is substantially the same as the amount of electrical energy transferred from the electrical grid 100 to the energy storage 121 over the time period $k$), depending on the relationship between the initial SoC level $C_{st,k}$ at the beginning of the time period $k$ and the target SoC level $C_{tgt,k}$ at the end of the time period $k$, the nominal input power $P_{in_mid,k}$ for the time period $k$ for operation in the FRC-N mode may be equal to, smaller than or greater than zero: in case the initial SoC level $C_{st,k}$ is equal to the target SoC level $C_{tgt,k}$, the nominal charging power $P_{in_mid,k}$ may be set to zero, whereas in case the initial SoC level $C_{st,k}$ is above the target SoC level $C_{tgt,k}$, the nominal charging power $P_{in_mid,k}$ may be set to a value below zero (which corresponds to discharging the energy storage 121) while in case the initial SoC level $C_{st,k}$ is below the target SoC level $C_{tgt,k}$, the nominal charging power $P_{in_mid,k}$ may be set to a value above zero (which corresponds to charging the energy storage 121). This way, the selection of the nominal charging power $P_{in_mid,k}$ facilitates continued operation in the FCR-N mode also in the subsequent time period(s). As an example in this regard, the nominal charging power $P_{in_mid,k}$ may be derived as $P_{in_mid,k} = (C_{tgt,k} - C_{st,k}) / t_k$, where $t_k$ denotes the duration of the time period $k$.

According to another example, the nominal charging power $P_{in_mid,k}$ for the time period $k$ for operation in the FCR-N mode may be derived further in consideration of non-zero estimated balancing energy $E_{est,k}$. In this regard, the nominal input power $P_{in_mid,k}$ that results in bringing the SoC level $C(t)$ from the initial SoC level $C_{st,k}$ in the beginning of the time period $k$ to the target SoC level $C_{tgt,k}$ at the end of the time period $k$ may be derived, for example, as $P_{in_mid,k} = (C_{tgt,k} - C_{st,k} + E_{est,k}) / t_k$. In other words, accounting for the estimated balancing energy $E_{est,k}$ in derivation of the nominal charging power $P_{in_mid,k}$ for the time period $k$, may be considered as derivation of an adjusted target SoC level $C'_{tgt,k}$ e.g. as $C'_{tgt,k} = C_{tgt,k} + E_{est,k}$ and derivation of the nominal charging power $P_{in_mid,k}$ for the time period $k$ based on the initial SoC level $C_{st,k}$ and the adjusted target SoC level $C'_{tgt,k}$, e.g. as $P_{in_mid,k} = (C'_{tgt,k} - C_{st,k}) / t_k$.

Hence, in case the estimated balancing energy $E_{est,k}$ is zero (and, consequently, also the estimated average charging power $P_{in_est,k}$ required for the power balancing functionality is zero), the nominal charging power $P_{in_mid,k}$ for the time period $k$ is the charging power required to bring the SoC level $C(t)$ during the time period $k$ from the initial SoC level $C_{st,k}$ to the target SoC level $C_{tgt,k}$, e.g. $P_{in_mid,k} = (C_{tgt,k} - C_{st,k}) / t_k$, which may be considered as a default nominal charging power (in view of the initial SoC level $C_{st,k}$ and the target SoC level $C_{tgt,k}$). On the other hand, in case the estimated balancing energy $E_{est,k}$ is below zero (i.e. the net effect of energy transfer for the power balancing purposes is assumed to involve discharging the energy storage 121) the nominal charging power $P_{in_mid,k}$ for the time period $k$ assumes a value smaller than that the default nominal charging power, whereas in case the estimated balancing energy $E_{est,k}$ is above zero (i.e. the net effect of energy transfer for the power balancing purposes is assumed to involve charging the energy storage 121) the nominal charging power $P_{in_mid,k}$ for the time period $k$ assumes a value higher than the default nominal charging power.

As an example, the estimated balancing energy $E_{est,k}$ may be derived via predicting the AC frequency $f(t)$ and/or the difference between the AC frequency $f(t)$ of the electrical grid 100 and the nominal system frequency $f_{mid}$ of the electrical grid 100 over the time period $k$ in view of the balancing reserve powers $P_{in_res,k}$, $P_{in_res_hi,k}$, $P_{in_res_lo,k}$ (as applicable). The prediction may be carried out before starting the time period $k$ (e.g. at the end of the time period $k$-1 or in the beginning of the time period $k$) and it may be based at least in part on history of observed AC frequencies $f(t)$ in the electrical grid 100. In this regard, the history of observed AC frequencies $f(t)$ may be applied for deriving one or more predicted AC frequencies $f'(t)$ during the time period $k$ in one or more time scales, for example one or more of the following:

- a short-term prediction may serve to estimate the AC frequencies $f(t)$ over the time period $k$ based on AC frequencies $f(t)$ observed within a time window of predefined duration that precedes the time period $k$;
- a long-term prediction may serve to estimate the AC frequencies $f(t)$ over the time period $k$ based on AC frequencies $f(t)$ having occurred during temporally related past time periods with respect to time of the day, day of the week, time of the year, etc.

In this regard, the short-term prediction may involve applying a predefined prediction model on observed values of the AC frequency $f(t)$ within the time window that precedes the time period $k$ in order to derive predicted AC frequencies $f'(t)$ for time period $k$. In this regard, the time window may cover, for example, $K$ time periods that precede the time period $k$ in the sequence of time periods, e.g. the time periods from $k$-$K$ to $k$-1. Herein, the number of time periods $K$ considered in the short-term prediction may be a suitable value chosen from a range from 1 to 10.

The long-term prediction may involve applying a predefined prediction model on observed values of the AC frequency $f(t)$ on one or more past time periods that have a respective predefined temporal relationship with the time period $k$ and that are hence likely to represent conditions with respect to status of the electrical grid 100 in terms of electricity production thereto and electricity consumption therefrom that are similar to those of the time period $k$. As a non-limiting example in this regard, the long-term prediction may rely on one or more of the following types of temporally related past time periods:

- past time periods that have occurred at the same time of the day with the time period $k$,
- past time periods that have occurred at the same weekday with the time period $k$,
- past time periods that have occurred at the same time of the year with the time period $k$ (e.g. in the same month of the year or in the same week from the beginning of the year).

Each of the short-term prediction and the long-term prediction may rely on a respective predefined prediction model in accordance with any applicable prediction technique known in the art, parameters of which may be derived on basis of experimental data collected via observing the AC frequency $f(t)$ of the electrical grid 100 over an extend period of time.

In the course of the time period $k$ in the FCR-N mode the changes in the instantaneous charging power $P_{in}(t)$ in accordance with the charging power adjustment rules described in the foregoing may be implemented by using a predefined approach with respect to the extent of change in the instantaneous charging power $P_{in}(t)$. As an example in this regard, the controller 122 may set the instantaneous charging power $P_{in}(t)$ to the minimum allowable charging power $P_{in_min,k}$ in case the observed AC frequency $f(t)$ is smaller than the nominal system frequency $f_{mid}$ and set the instantaneous charging power $P_{in}(t)$ to the maximum allowable charging power $P_{in_max,k}$ in case the observed AC frequency $f(t)$ is larger than the nominal system frequency $f_{mid}$.

As another example, the change applied in the instantaneous charging power $P_{in}(t)$ may be proportional to the difference between the observed AC frequency $f(t)$ and the nominal system frequency $f_{mid}$. As an example in this regard, in case the observed AC frequency $f(t)$ is smaller than the nominal system frequency $f_{mid}$, the controller 122 may set the instantaneous charging power $P_{in}(t)$ to a value that is smaller than the nominal charging power $P_{in_mid,k}$ by an amount that is proportional to the difference between the nominal system frequency $f_{mid}$ and the observed AC frequency $f(t)$. Along similar lines, in case the observed AC frequency $f(t)$ is larger than the nominal system frequency $f_{mid}$, the controller 122 may set the instantaneous charging power $P_{in}(t)$ to a value that is larger than the nominal charging power $P_{in_mid,k}$ by an amount that is proportional to the difference between the observed AC frequency $f(t)$ and the nominal system frequency $f_{mid}$.

The proportional adjustment may be carried out in view of the allowable range of charging powers defined by the minimum allowable charging power $P_{in_min,k}$ and the maximum allowable charging power $P_{in_max,k}$ defined for the time period $k$ e.g. such that the proportional adjustment allows for decreasing the instantaneous charging power $P_{in}(t)$ with decreasing observed AC frequency $f(t)$ until reaching the minimum allowable charging power $P_{in_min,k}$ and/or for increasing the instantaneous charging power $P_{in}(t)$ with increasing observed AC frequency $f(t)$ until reaching the maximum allowable charging power $P_{in_max,k}$. As a non-limiting example, such proportional adjustment may be provided such that the instantaneous charging power $P_{in}(t)$ decreases substantially linearly with decreasing observed AC frequency $f(t)$ and reaches the minimum allowable charging power $P_{in_min,k}$ when the observed AC frequency $f(t)$ reaches the lower limit of the nominal system frequency range and that the instantaneous charging power $P_{in}(t)$ increases substantially linearly with increasing observed AC frequency $f(t)$ and reaches the maximum allowable charging power $P_{in_max,k}$ when the observed AC frequency $f(t)$ reaches the upper limit of the nominal system frequency range.

In the example(s) above, the proportional adjustment of the instantaneous charging power $P_{in}(t)$ may be provided by using a step of a predefined size. In this regard, in case the applicable charging power adjustment rules suggest a change in the instantaneous charging power $P_{in}(t)$ the instantaneous charging power $P_{in}(t)$ may be decreased by a first predefined step (until reaching the minimum allowable charging power $P_{in_min,k}$ set for the time period $k$) or the instantaneous charging power $P_{in}(t)$ may be increased by a second predefined step (until reaching the maximum allowable charging power $P_{in_min,k}$ set for the time period $k$), depending on the direction of change in the instantaneous charging power $P_{in}(t)$. According to an example, the step size towards a higher instantaneous charging power $P_{in}(t)$ (i.e. an upwards step) and the step size towards a lower instantaneous charging power $P_{in}(t)$ (i.e. a downwards step) are the same or substantially the same, whereas in another example the upwards step is different from the downwards step. As an example of the latter, the downwards step may be larger than the upwards step to ensure providing a prompt and sufficient reaction to increased load in the electrical grid 100. An applicable step size may depend, for example, on the allowable charging power range (from the minimum allowable charging power $P_{in_min,k}$ to the maximum allowable charging power $P_{in_max,k}$), the overall capacity of the energy storage 121 and/or on any regulations or rules imposed by the operator of the electrical grid 100.

The adjustment of the instantaneous charging power $P_{in}(t)$ in accordance with the applicable charging power adjustment rules in dependence of the observed AC frequency $f(t)$ may be carried out according to a predefined schedule, e.g. such that the controller 122 monitors the AC frequency $f(t)$ of the electrical grid 100 at predefined time intervals and adjusts the instantaneous charging power $P_{in}(t)$ accordingly. Herein, the time intervals that define the schedule for monitoring the AC frequency $f(t)$ (and possibly adjusting the instantaneous charging power $P_{in}(t)$) may be a suitable value selected, for example, from a range from a few seconds to one minute, e.g. ten seconds. The most appropriate time interval may depend, for example, on the desired reaction speed to any changes in the observed AC frequency $f(t)$ of the electrical grid 100, on characteristics and/or capabilities of the elements of the PBR apparatus 120 and/or on characteristics of and/or requirements set for the electrical grid 100.

Consequently, in the FCR-N mode the controller 122 controls the transfer of electric power between the energy storage 121 and the electrical grid 100 (e.g. charging or discharging of the energy storage 121) during the time period $k$ in accordance with operating parameters defined therefor, e.g. according to the nominal charging power $P_{in_mid,k}$, the maximum allowable charging power $P_{in_max,k}$ and the minimum allowable charging power $P_{in_min,k}$.

Operation of the PBR apparatus 120 in the FCR-N mode described in the foregoing via a number of examples may be, alternatively, described as steps of a method. As an example in this regard, Figure 3 illustrates a flowchart depicting a method 200. The method 200 proceeds from controlling transfer of electrical energy between the energy storage 121 and the electrical grid 100 in dependence of the difference between the observed AC frequency $f(t)$ of the electrical grid 100 and the nominal system frequency $f_{mid}$ of the electrical grid 100 in view of the minimum and maximum SoC levels via adjustment of the instantaneous charging power $P_{in}(t)$ that indicates the amount of electric power currently transferred from the electrical grid 100 to the energy storage 121, as indicated in block 202. The method 200 further comprises deriving the nominal charging power $P_{in_mid,k}$ for a time period at least in dependence of the initial SoC level $C_{st,k}$ of the energy storage 121 in the beginning of the time period and the target SoC level $C_{tgt,k}$ of the energy storage 121 at the end of the time period, as indicated in block 204. The method 200 further comprises setting the instantaneous charging power $P_{in}(t)$ to the nominal charging power $P_{in_mid,k}$ in response to the observed AC frequency $f(t)$ substantially matching the nominal system frequency $f_{mid}$, as indicated in block 206a, setting the instantaneous charging power $P_{in}(t)$ to a value that is smaller than the nominal charging power $P_{in_mid,k}$ in response to the observed AC frequency $f(t)$ being below the nominal system frequency $f_{mid}$, as indicated in block 206b, or setting the instantaneous charging power $P_{in}(t)$ to a value that is larger than the nominal charging power $P_{in_mid,k}$ in response to the observed AC frequency $f(t)$ exceeding the nominal system frequency $f_{mid}$, as indicated in block 206c. Respective operations described with references to blocks 202, 204, 206a, 206b and 206c pertaining to the method 200 may be implemented, varied and/or complemented in a number of ways, for example as described in the foregoing and in the following with references to the operation of the PBR apparatus 120.

Graphs (i), (ii) and (iii) of Figure 4A illustrate a non-limiting example of respective changes in the observed AC frequency $f(t)$, in the instantaneous charging power $P_{in}(t)$ and in the SoC level $C(t)$ as a function of time during a time period in the FCR-N mode. In the example of Figure 4A, the vertical dashed lines divide the time period illustrated therein is divided into five sub-periods, while any changes in the AC frequency $f(t)$ of the electrical grid 100 is shown to occur upon change from a sub-period to the next one. This is a choice made for graphical clarity of illustration that leads to a relatively infrequent changes in the observed AC frequency $f(t)$, and consequently, in the instantaneous charging power $P_{in}(t)$, whereas in a real-life situation the observed AC frequency $f(t)$ in the electrical grid 100 may change substantially continuously and, consequently, the instantaneous charging power $P_{in}(t)$ may be substantially continuously adjusted accordingly.

As shown in the graph (i), in the first sub-period the AC frequency $f(t)$ is below the nominal system frequency $f_{mid}$, it rises above the nominal system frequency $f_{mid}$ for the second and third sub-periods, reduces to the nominal system frequency $f_{mid}$ for the fourth sub-period, and drops again below the nominal system frequency $f_{mid}$ for the fifth sub-period. As shown in the graph (ii), the instantaneous charging power $P_{in}(t)$ follows the AC frequency $f(t)$ such that when the AC frequency $f(t)$ is below the nominal system frequency $f_{mid}$ (e.g. in the first and fifth sub-periods), the instantaneous charging power $P_{in}(t)$ is set below the nominal charging power $P_{in_mid,k}$, when the AC frequency $f(t)$ is above the nominal system frequency $f_{mid}$ (e.g. in the second and third sub-periods), the instantaneous charging power $P_{in}(t)$ is set above the nominal charging power $P_{in_mid,k}$ and when the AC frequency $f(t)$ substantially matches the nominal system frequency $f_{mid}$ (e.g. in the fourth sub-period), the instantaneous charging power $P_{in}(t)$ is set at the nominal charging power $P_{in_mid,k}$. The graph (iii) shows two different examples regarding the change in the SoC level $C(t)$ of the energy storage 121 over time:

- The solid curve represents an example where the nominal charging power $P_{in_mid,k}$ is set to zero. In this example, since during the first sub-period the instantaneous charging power $P_{in}(t)$ is below the nominal charging power $P_{in_mid,k}$, the SoC level $C(t)$ constantly decreases throughout the first sub-period. In the second and third sub-periods the instantaneous charging power $P_{in}(t)$ is above the nominal charging power $P_{in_mid,k}$, and consequently the SoC level $C(t)$ constantly increases throughout the second and third sub-periods. In the fourth sub-period the instantaneous charging power $P_{in}(t)$ is substantially at the nominal charging power $P_{in_mid,k}$ (i.e. at zero), and consequently the SoC level $C(t)$ remains substantially constant throughout the fourth sub-period. Finally, in the fifth sub-period the instantaneous charging power $P_{in}(t)$ is again below the nominal charging power $P_{in_mid,k}$, and consequently the SoC level $C(t)$ constantly decreases throughout the fifth sub-period.
- The dashed curve represent an example where the nominal charging power $P_{in_mid,k}$ is set to a value above zero, e.g. to account for a higher-than-zero estimated balancing energy $E_{est,k}$ estimated via prediction of the AC frequency $f(t)$ for the respective time period. While the change in the SoC level $C(t)$ follows a similar trend as in the example represented by the solid curve, in this example the higher-than-zero nominal charging power $P_{in_mid,k}$ results in compensating for the decreasing overall trend in the observed AC frequency $f(t)$ and, consequently, results in bringing the SoC level $C(t)$ at the end of the time period closer to the midpoint SoC level $C_{mid}$, thereby providing more advantageous starting point for the next time period in the FCR-N mode.

Figure 4B provides another example, where the AC frequency $f(t)$ is below the nominal system frequency $f_{mid}$ throughout the time period and therefore the instantaneous charging power $P_{in}(t)$ is set below the nominal charging power $P_{in_mid,k}$ throughout the time period. Consequently, if assuming zero-valued nominal charging power $P_{in_mid,k}$, the SoC level $C(t)$ drops to the lower SoC level $C_{min}$ at the end of the third sub-period (the solid curve in the graph (iii) of Figure 4B), whereas a suitably selected higher-than-zero nominal charging power $P_{in_mid,k}$ enables keeping the SoC level $C(t)$ close to the midpoint SoC level $C_{mid}$ throughout the time period and especially at the end of the time period while still providing the power balancing function defined for the time period (the dashed curve in the chart (iii) of Figure 4B). Along similar lines, in case the AC frequency $f(t)$ remains above the nominal system frequency $f_{mid}$ throughout the time period, a suitably selected lower-than-zero nominal charging power $P_{in_mid,k}$ enables keeping the SoC level $C(t)$ close to the midpoint SoC level $C_{mid}$ throughout the time period and especially at the end of the time period while still providing the power balancing function defined for the time period.

Depending on the changes in the AC frequency $f(t)$ of the electrical grid 100 during consecutive time periods of operating the PBR apparatus 120 in the FCR-N mode the SoC level $C(t)$ of the energy storage 121 may end up being at or close to the minimum allowable SoC level $C_{min}$ or at or close to the maximum allowable SoC level $C_{max}$, thereby resulting in a situation where the FCR-N function cannot be provided without a significant risk of departing from the allowable SoC range of the energy storage 121. As an example of mitigating this risk, the balancing reserve powers $P_{in_res,k}$, $P_{in_res_hi,k}$, $P_{in_res_lo,k}$ (as applicable) may be set values that decrease over time (i.e. over consecutive time periods), thereby facilitating prolonged operation in the FCR-N mode without departing from the allowable SoC range of the energy storage 121 with the cost of reduced balancing reserve power available from the PBR apparatus 120. However, such decreasing trend of the balancing reserve powers $P_{in_res,k}$, $P_{in_res_hi,k}$, $P_{in_res_lo,k}$ (as applicable) nevertheless serves to increase the overall power balancing capability of the PBR apparatus 120 due prolonged operation in the FCR-N mode.

According to an example, additionally or alternatively, there may be predefined maximum number of consecutive time periods in the FCR-n mode, after which the PBR apparatus 120 is switched to operate in a recovery mode in order to mitigate the risk of resulting in a situation where the SoC level $C(t)$ of the energy storage 121 limits the applicability of the FCR-N function. In another example, the controller 122 may monitor the SoC level $C(t)$ and change the operating mode of the PBR apparatus 120 from the FCR-N mode to the recovery mode after the time period $k$ in response to the SoC level $C(t)$ at the end of the time period $k$ being within a predefined margin from the minimum allowable SoC level $C_{min}$ or from the maximum allowable SoC level $C_{max}$. In the recovery mode, the controller 122 adjusts transfer of the electric power between the energy storage 121 and the electrical grid 100 to charge or discharge (whichever applies) the energy storage 121 such that the SoC level $C(t)$ at the end of the respective time period is brought at or close to the target SoC level $C_{tgt,k}$. An applicable target SoC level $C_{tgt,k}$ for a time period that follows the recovery period may depend on the operating mode of the PBR apparatus 120 in the respective time period. In case the PBR apparatus 120 is assigned to operate in the FCR-N mode in the time period following the time period in the recovery mode, the target SoC level $C_{tgt,k}$ may be the midpoint SoC level $C_{mid}$.

Still referring to the first scenario that assumes operating the PBR apparatus 120 in a single operating mode during a plurality of consecutive time periods of the time schedule, in another example the single operating mode in the framework of the first scenario may be one where the controller 122 is arranged to operate the PBR apparatus 120 to provide a fast frequency reserve (FFR) function via temporarily increasing the supply of electric power from the energy storage 121 to the electrical grid 100 in response to the observed AC frequency $f(t)$ of the electrical grid 100 falling below a predefined FFR threshold frequency $f_{ffr}$, which FFR threshold frequency $f_{ffr}$ is below the nominal system frequency range. As an example, assuming the nominal system frequency $f_{mid}$ of 50 Hz, the FFR threshold frequency $f_{ffr}$, may be set, for example, to a value in a range from 49.0 to 49.9 Hz, e.g. one of 49.5 Hz, 49.6 Hz and 49.7 Hz. The operating mode in which the PBR apparatus 120 provides the FFR function may be referred to as a FFR mode of the PBR apparatus 120.

In the FFR mode, the controller 122 may adjust the instantaneous charging power $P_{in}(t)$ in dependence of the observed AC frequency $f(t)$ according to one or more of the following charging power adjustment rules:

- The currently applied instantaneous charging power $P_{in}(t)$ is kept constant in case the observed AC frequency $f(t)$ is above the FFR threshold frequency $f_{ffr}$.
- In case the observed AC frequency $f(t)$ falls below the FFR threshold frequency $f_{ffr}$, the currently applied instantaneous charging power $P_{in}(t)$ is decreased for a time segment of predefined duration, after which the instantaneous charging power $P_{in}(t)$ is returned to its constant level, thereby discharging a power pulse form the energy storage 121 to the electrical grid 100. As an example in this regard, the instantaneous charging power $P_{in}(t)$ during the power pulse may be decreased by a predefined FFR power $P_{ffr,k}$ for the time segment that has a predefined FFR pulse duration $t_{ffr}$.

In the FFR mode, the controller 122 may adjust the instantaneous charging power $P_{in}(t)$ in view of the allowable SoC range, e.g. such the SoC level $C(t)$ is kept within the allowable SoC range, as described in the foregoing in context of the FCR-N mode. In the FFR mode, the one of more operating parameters of the PBR apparatus 120 for a time period $k$ may comprise the following:

- the nominal charging power $P_{in_mid,k}$ (or the nominal discharging power $P_{out_mid,k}$);
- the FFR power $P_{ffr,k}$;

As described in the foregoing for the FCR-N mode, the nominal charging power $P_{in_mid,k}$ for the time period $k$ may be considered as a virtual midpoint charging power or as a default charging power for the respective time period, which is applied as the instantaneous charging power $P_{in}(t)$ unless the observed AC frequency $f(t)$ falls below the FFR threshold frequency $f_{ffr}$. In contrast, in case the observed AC frequency $f(t)$ falls below the FFR threshold frequency $f_{ffr}$, the controller 122 decreases the instantaneous charging power $P_{in}(t)$ by the FFR power $P_{ffr,k}$ for the time segment that has the FFR pulse duration $t_{ffr}$ and increases the instantaneous charging power $P_{in}(t)$ back to the nominal charging power $P_{in_mid,k}$ after the power pulse has been discharged.

Along the lines described above, the FFR power $P_{ffr,k}$ may be a predefined value set for the time period $k$ that may be set, for example, based on the agreement with the respective operators of the PBR apparatus 120 and the electrical grid 100. The FFR pulse duration $t_{ffr}$ may be likewise a predefined one, set e.g. to a value in a range from a few seconds to a few minutes, e.g. 30 seconds. In the FFR mode, there may be a requirement to initiate discharging of the power pulse within a predefined time margin since the observed AC frequency $f(t)$ having fallen below the FFR threshold frequency $f_{ffr}$, where the time margin may be, for example, in a range of a few tenths of a second to a few seconds. Hence, the FFR mode may be applied to provide a virtually immediate reaction to a situation where the observed AC frequency $f(t)$ of the electrical grid 100 falls below the FFR threshold frequency $f_{ffr}$.

Derivation of the nominal charging power $P_{in_mid,k}$ for the time period k in the FFR mode is similar to that described in the foregoing for the FCR-N mode, *mutatis mutandis.* In other words, the nominal charging power $P_{in_mid,k}$ for the time period $k$ in the FFR mode may be derived in dependence of the initial SoC level $C_{st,k}$ in the beginning of the time period $k$ and the target SoC level $C_{tgt,k}$ at the end of the time period $k$ further in view of the allowable SoC range. In the FFR mode, though, the estimated balancing energy $E_{est,k}$ described in context of the FCR-N mode may be omitted in derivation of the nominal charging power $P_{in_mid,k}$ and it may be assumed zero. Consequently, the nominal charging power $P_{in_mid,k}$ for the time period $k$ in the FFR mode may be derived e.g. as $P_{in_mid,k} = (C_{tgt,k} - C_{st,k}) / t_k$, i.e. such that if the AC frequency $f(t)$ of the electrical grid 100 remains above the FFR threshold frequency $f_{ffr}$ throughout the time period $k$, the SoC level $C(t)$ will be brought to the target SoC level $C_{tgt,k}$ at the end of the time period $k$ (and hence at the beginning of the time period $k+1$). For the FFR mode, however, advantageous values for the initial SoC level $C_{st,k}$ in the beginning of the time period $k$ and for the target SoC level $C_{tgt,k}$ at the end of the time period $k$ are different from those of the FCR-N mode: for the FFR mode, an advantageous starting point for any time period of operation in the FFR mode in terms of the initial SoC level $C_{st,k}$ is any SoC level that allows for a power pulse to be discharged in the beginning of the respective time period without decreasing the SoC level $C(t)$ below the lower SoC limit $C_{min}$ while the same applies for the target SoC level $C_{tgt,k}$ at the end of the respective time period. Hence, for continued operation in the FFR mode the target SoC level $C_{tgt,k}$ at the end of the time period $k$ may be set to any value that enables provision of a power pulse in the beginning of the next time period without decreasing the SoC level $C(t)$ below the lower SoC limit $C_{min}$. Therefore, a suitable target SoC level $C_{tgt,k}$ is above the lower SoC limit $C_{min}$ at least by the amount of electrical energy that may need to be discharged from the energy storage 121 due to a power pulse, which may be referred to as a FFR pulse energy $E_{frr,k+1}$ and it may be computed as a product of the FFR pulse duration $t_{ffr}$ and the FFR power $P_{frr,k+1}$, i.e. as $E_{frr,k+1} = P_{frr,k+1} \cdot t_{ffr}$. Hence, the lowest SoC level that enables provision of the power pulse may be computed as the sum of the lower SoC limit $C_{min}$ and the FFR pulse energy $E_{frr,k+1}$ (i.e. $C_{min} + E_{frr,k+1}$) and, consequently, the target SoC level $C_{tgt,k}$ may be set to a value that is larger than or equal to $C_{min} + E_{frr,k+1}$.

If using the nominal charging power $P_{in_mid,k}$ derived according to the example described above, discharging electrical power from the energy storage 121 to provide the power pulse to the electrical grid 100 during the time period *k* results in reduction of the SoC level $C(t)$ and, consequently, results in a failure the reach the target SoC level $C_{tgt,k}$ at the end of the time period *k* unless the instantaneous charging power $P_{in}(t)$ for the remainder of the time period *k* is increased to compensate for the decreased SoC level $C(t)$. In an example, this may be accounted for by determining a redefined nominal charging power $P'_{in_mid,k}$ for the remainder of the time period *k* after provision of the power pulse in dependence of the SoC level $C(t)$ after provision of the power pulse and the target SoC level $C_{tgt,k}$ such that redefined nominal charging power $P'_{in_mid,k}$ would result in reaching the target SoC level $C_{tgt,k}$ at the end of the time period *k* if no further power pulses are discharged from the energy storage 121 during the remainder of the time period *k*. Hence, in this example the nominal charging power $P_{in_mid,k}$ is applied as the instantaneous charging power $P_{in}(t)$ before discharging the power pulse and the instantaneous charging power $P_{in}(t)$ is adjusted to the redefined nominal charging power $P'_{in_mid,k}$ after the power pulse has been discharged to ensure reaching the target SoC level $C_{tgt,k}$ at the end of the time period *k*. As an example in this regard, the redefined nominal charging power $P'_{in_mid,k}$ may be derived as $P'_{in_mid,k} = (C_{tgt,k} - C_{int,k}) / t_{int,k}$, where $C_{int,k}$ denotes the charging level $C(t)$ after the power pulse has been discharged and $t_{int,k}$ denotes the time remaining in the time period k after having discharged the power pulse.

In another example, the sufficient SoC level $C(t)$ at the end of the time period *k* may be ensured via application of a further operating parameter for the FFR mode: a temporary lower SoC limit $C_{min,k}$ may be applied instead of the lower SoC limit $C_{min}$ to define the lowest allowable SoC level for the time period *k*. The temporary lower SoC limit $C_{min,k}$ may be also referred to as a virtual lower SoC limit. The temporary lower SoC limit $C_{min,k}$ applied for the time period *k* is larger than the lower SoC limit $C_{min}$ (i.e. $C_{min,k} > C_{min}$). In particular, the temporary lower SoC limit $C_{min,k}$ may be set to a value that allows for a power pulse to be discharged in the beginning of the time period *k+1* without decreasing the SoC level $C(t)$ below the lower SoC limit $C_{min}$. In this regard, the temporary lower SoC limit $C_{min,k}$ may be set to a value that is larger than or equal to the sum of the lower SoC limit $C_{min}$ and the FFR pulse energy $E_{frr,k+1}$ (i.e. $C_{min} + E_{frr,k+1}$). Consequently, application of the temporary lower SoC limit $C_{min,k}$ (instead of the lower SoC limit $C_{min}$) for the time period *k* ensures sufficient SoC level $C(t)$ at the beginning of the time period *k+1* and leaves some freedom in terms of reaching the target SoC level $C_{tgt,k}$ at the end of the time period *k* since observance of the temporary lower SoC limit $C_{min,k}$ guarantees sufficient SoC level $C(t)$ at the end of the time period *k*, thereby rendering derivation of the redefined nominal charging power $P_{in_mid,k}$ during the time period *k* non-mandatory and/or allows for application of a redefined nominal charging power $P'_{in_mid,k}$ that is lower than that defined in the example described in the foregoing.

Like in the FCR-N mode, also in the FFR mode the nominal charging power $P_{in_mid,k}$ for the time period *k* may be zero, below zero (which corresponds to discharging the energy storage 121), or above zero (which corresponds to charging the energy storage 121), depending on the relationship between the initial SoC level $C_{st,k}$ in the beginning of the time period *k* and the target SoC level $C_{tgt,k}$ at the end of the time period *k*. In this regard, it is worth noting that since the power actually discharged from the energy storage 121 in the course of a power pulse is a combined power of the currently applied nominal charging power $P_{in_mid,k}$ and the FFR power $P_{ffr,k}$: in case the nominal charging power $P_{in_mid,k}$ is below zero, the total power discharged from the energy storage 121 during a power pulse is higher than the FFR power $P_{ffr,k}$, whereas in case the nominal charging power $P_{in_mid,k}$ is above zero, the total power discharged from the energy storage 121 during a power pulse is actually lower than the FFR power $P_{ffr,k}$. In the latter case, assuming that the FFR power $P_{ffr,k}$ is larger than the above-zero nominal charging power $P_{in_mid,k}$, part of the power pulse actually arises from temporarily decreasing the power consumption from the electrical grid 100 due to charging of the energy storage 121 being temporarily discontinued for the FFR pulse duration $t_{ffr}$, whereas in case the FFR power $P_{ffr,k}$ is not larger than the above-zero nominal charging power $P_{in_mid,k}$, the power pulse is actually a virtual one that arises from temporary reduction of the charging power supplied from the electrical grid 100 to the energy storage 121. Hence, with a suitable selection of the nominal charging power $P_{in_mid,k}$ and the FFR power $P_{ffr,k}$ it is actually possible to provide (at least partially) virtual power pulse that exceeds the discharging capability of the energy storage 121.

Consequently, in the FFR mode the controller 122 controls the transfer of electric power between the energy storage 121 and the electrical grid 100 (e.g. charging or discharging of the energy storage 121) during the time period *k* in accordance with operating parameters defined therefor, e.g. according to the nominal charging power $P_{in_mid,k}$, the FFR power $P_{ffr,k}$ and (optionally) the temporary lower SoC limit $C_{min,k}$. Since the transfer of electric power to and/or from the energy storage 121 during the time period *k* depends on occasions of the observed AC frequency *f*(*t*) of the electrical grid 100 falling below the FFR threshold frequency $f_{ffr}$ that may occur in an unpredictable manner, the SoC level of the energy storage 121 during the time period *k* may likewise change in an unpredictable manner. Consequently the SoC level *C*(*t*) at the end of the time period *k*, and hence in the beginning of the time period *k+1*, may be taken into account in determination of the nominal charging power $P_{in_mid,k}$ for the time period *k+1* according to the examples described above (that pertain to determination of these operating parameters for the FFR mode of the PBR apparatus 120 for the time period *k*).

Graphs (i), (ii) and (iii) of Figure 5 illustrate a non-limiting example of respective changes in the observed AC frequency *f*(*t*), in the instantaneous charging power $P_{in}(t)$ and in the SoC level *C*(*t*) as a function of time during a time period in the FFR mode. In the example of Figure 5, the graph (i) shows the AC frequency *f*(*t*) of the electrical grid 100 as a function of time, where the AC frequency *f*(*t*) remains close to the nominal system frequency $f_{mid}$ apart from dropping below the FFR threshold frequency $f_{ffr}$ for a short while. As described in the foregoing and illustrated in the graph (ii), the AC frequency *f*(*t*) falling below the FFR threshold frequency $f_{ffr}$ results in discharging a power pulse from the energy storage 121, where the instantaneous charging power $P_{in}(t)$ is decreased by the amount defined by the FFR power $P_{ffr,k}$ for the time segment that has the FFR pulse duration $t_{ffr}$. Moreover, the graph (ii) further illustrates applying the nominal charging power $P_{in_mid,k}$ before discharging the power pulse and application of the redefined nominal charging power $P'_{in_mid,k}$ (that is higher than the nominal charging power $P_{in_mid,k}$) after the power pulse has been discharged. The graph (iii) illustrates two examples regarding the change in the SoC level *C*(*t*) of the energy storage 121 over time:

- The solid curve represents an example where the nominal charging power $P_{in_mid,k}$ is set to zero in order to keep the SoC level *C*(*t*) at the midpoint SoC level $C_{mid}$. In this example, due to the zero-valued nominal charging power $P_{in_mid,k}$ the SoC level *C*(*t*) remains at the midpoint SoC level $C_{mid}$ until discharging the power pulse that decreases the SoC level *C*(*t*) accordingly, whereas the redefined nominal charging power $P'_{in_mid,k}$ applied after discharging the power pulse is higher than the nominal charging power $P_{in_mid,k}$ applied before introduction of the power pulse in order to bring the SoC level *C*(*t*) to the midpoint SoC level $C_{mid}$ (which in this example is the target SoC level $C_{tgt,k}$ at the end of the time period).
- The dashed curve represents an example where the nominal charging power $P_{in_mid,k}$ is set to a value that is above zero in order to bring the SoC level *C*(*t*) to the midpoint SoC level $C_{mid}$ at the end of the time period. In this example, due to the higher-than-zero nominal charging power $P_{in_mid,k}$ the SoC level *C*(*t*) constantly increases until discharging the power pulse that decreases the SoC level *C*(*t*) accordingly, whereas the redefined nominal charging power $P'_{in_mid,k}$ applied after discharging the power pulse is higher than the nominal charging power $P_{in_mid,k}$ applied before introduction of the power pulse in order to bring the SoC level *C*(*t*) to the midpoint SoC level $C_{mid}$ as the end of the time period.

As described in the foregoing, in other examples the nominal charging power $P_{in_mid,k}$ may be smaller than zero, thereby constantly decreasing the SoC level *C*(*t*) at a rate defined by the nominal charging power $P_{in_mid,k}$, whereas introduction of the power pulse due to the AC frequency *f*(*t*) dropping below the FFR threshold frequency $f_{ffr}$ results in temporarily discharging the energy storage 121 at an increased rate, followed by application of the redefined nominal charging power $P'_{in_mid,k}$ (that is higher than the nominal charging power $P_{in_mid,k}$) to decrease the SoC level *C*(*t*) at a reduced rate (in comparison to the nominal charging power $P_{in_mid,k}$) in order to bring the SoC level *C(t)* at the end of the time period to the midpoint SoC level $C_{mid}$ (or to another target SoC level $C_{tgt,k}$). In further examples, alternatively or additionally, the application the redefined nominal charging power $P'_{in_mid,k}$ after discharging the power pulse (illustrated e.g. in the graph (ii) of Figure 5) may be omitted, thereby possibly resulting in a SoC level *C*(*t*) that is higher or lower than the midpoint SoC level $C_{mid}$ (or another target SoC level $C_{tgt,k}$) at the end of the time period.

Still referring to the first scenario that assumes operating the PBR apparatus 120 in a single operating mode during a plurality of consecutive time periods of the time schedule, in a further example the single operating mode in the framework of the first scenario may be one where the controller 122 is arranged to operate the PBR apparatus 120 to provide a frequency containment reserve (FCR) function for the disturbance state of the electrical grid 100. Hence, the operating mode in which the PBR apparatus 120 provides the FCR function for the disturbance state may be referred to as a FCR-D mode of the PBR apparatus 120. The electrical grid 100 may be considered to be in a disturbance state when the AC frequency $f(t)$ of the electrical grid 100 is outside the nominal system frequency range of the electrical grid 100 (e.g. outside the range from 49.9 Hz to 50.1 Hz in case of the 50 Hz nominal system frequency $f_{mid}$).

In this regard, the PBR apparatus 120 may be further arranged to operate in one of the FCR-D up mode or in the FCR-D down mode. In the FCR-D up mode the PBR apparatus 120 operates to temporarily decrease the supply of electric power from the electrical grid 100 to the energy storage 121 in response to the observed AC frequency $f(t)$ of the electrical grid 100 falling below a predefined lower FCR-D threshold frequency $f_{fcr_lo}$, thereby contributing towards increasing the AC frequency $f(t)$ of the electrical grid (hence the name FCR-D *up*). The lower FCR-D threshold frequency $f_{fcr_lo}$ is smaller than or equal to the lower limit of the nominal system frequency range but above the FFR threshold frequency $f_{ffr}$ (if applicable). As an example, assuming the nominal system frequency $f_{mid}$ of 50 Hz, the lower FCR-D threshold frequency $f_{fcr_lo}$, may be set, for example, to 49.9 Hz. In the FCR-D down mode the PBR apparatus 120 operates to temporarily increase the supply of electric power from the electrical grid 100 to the energy storage 121 in response to the observed AC frequency $f(t)$ of the electrical grid 100 exceeding a predefined upper FCR-D threshold frequency $f_{fcr_hi}$, thereby contributing towards decreasing the AC frequency $f(t)$ of the electrical grid (hence the name FCR-D *down*). The upper FCR-D threshold frequency $f_{fcr_hi}$ is larger than or equal to the upper limit of the nominal system frequency range. As an example, assuming the nominal system frequency $f_{mid}$ of 50 Hz, the upper FCR-D threshold frequency $f_{fcr_lo}$, may be set, for example, to 50.1 Hz. Referring now to the FCR-D up mode, in the course of operation in the FCR-D up mode the controller 122 may adjust the instantaneous charging power $P_{in}(t)$ in dependence of the observed AC frequency $f(t)$ according to one or more of the following charging power adjustment rules:

- The currently applied instantaneous charging power $P_{in}(t)$ is kept constant in case the observed AC frequency $f(t)$ is above the lower FCR-D threshold frequency $f_{fcr_lo}$.
- In case the observed AC frequency $f(t)$ falls below the lower FCR-D threshold frequency $f_{fcr_lo}$, the currently applied instantaneous charging power $P_{in}(t)$ is decreased until the observed AC frequency $f(t)$ rises back above the lower FCR-D threshold frequency $f_{fcr_lo}$, after which the instantaneous charging power $P_{in}(t)$ is returned to its constant level, thereby discharging a power pulse form the energy storage 121 to the electrical grid 100. As an example in this regard, the instantaneous charging power $P_{in}(t)$ during the power pulse may be decreased by a predefined FCR-D power $P_{fcr,k}$.

In the FCR-D up mode, the controller 122 may adjust the instantaneous charging power $P_{in}(t)$ in view of the allowable SoC range, e.g. such the SoC level $C(t)$ is kept within the allowable SoC range, as described in the foregoing in context of the FCR-N mode. In the FCR-D up mode, the one of more operating parameters of the PBR apparatus 120 for a time period $k$ may comprise the following:

- the nominal charging power $P_{in_mid,k}$ (or the nominal discharging power $P_{out_mid,k}$);
- the FCR-D power $P_{fcr,k}$;

As described in the foregoing for the FCR-N mode, the nominal charging power $P_{in_mid,k}$ for the time period $k$ may be considered as a virtual midpoint charging power or as a default charging power for the respective time period, which is applied as the instantaneous charging power $P_{in}(t)$ unless the observed AC frequency $f(t)$ falls below the lower FCR-D threshold frequency $f_{fcr_lo}$. In contrast, in case the observed AC frequency $f(t)$ falls below the lower FCR-D threshold frequency $f_{fcr_lo}$, the controller 122 decreases the instantaneous charging power $P_{in}(t)$ by the FCR-D power $P_{fcr,k}$ and increases the instantaneous charging power $P_{in}(t)$ back to the nominal charging power $P_{in_mid,k}$ when the observed AC frequency $f(t)$ rises back above the lower FCR-D threshold frequency $f_{fcr_lo}$.

Along the lines described above, the FCR-D power $P_{fcr,k}$ may be a predefined value set for the time period $k$ that may be set, for example, based on the agreement with the respective operators of the PBR apparatus 120 and the electrical grid 100. Unlike in the FFR mode, the power pulse that may be issued in the FCR-D up mode does not have a predefined duration but the pulse may be continued as long as the observed AC frequency $f(t)$ remains below the lower FCR-D threshold frequency $f_{fcr_lo}$. Another difference to the FFR mode in terms of provision of the power pulse arises from different threshold frequencies ($f_{fcr_lo}$, $f_{ffr}$) that trigger provision of the power pulse, whereas a further difference arises from a reaction time to the observed AC frequency $f(t)$ of the electrical grid 100 falling below the respective ones of the thresholds $f_{fcr_lo}$, $f_{ffr}$: in the FCR-D up mode the allowable time margin for initiating discharging of the power pulse since the observed AC frequency $f(t)$ has fallen below the lower FCR-D threshold frequency $f_{fcr_lo}$ may be, for example, in a range of a few seconds to a few tens of seconds, the FCR-D up mode hence serving to provide a slower reaction to decreased AC frequency $f(t)$ of the electrical grid 100 while in some scenarios the resulting power pulse may be significantly longer than that of the FFR mode.

Regarding other aspects of operation in the FCR-D up mode, including definition of the nominal charging power $P_{in_mid,k}$, possible derivation of the redefined nominal charging power $P'_{in_mid,k}$ following the power pulse provided from the charge storage 121 and/or application of the temporary lower SoC limit $C_{min,k}$ are similar to those described in the foregoing for the FFR mode, *mutatis mutandis.* However, for derivation of the nominal charging power $P_{in_mid,k}$ and the temporary lower SoC limit $C_{min,k}$ for the FCR-D up mode, an estimated FCR-D pulse energy $E_{fcr,k+1}$, is applied instead of the FFR pulse energy $E_{ffr,k+1}$. This difference arises from the fact that pulse duration of the power pulse that may need to be discharged during the time period *k*+1 is not known in advance and hence the amount of electrical energy required therefor may be based on an estimated maximum pulse duration $t_{fcr_max}$, which enables computing the estimated FCR-D pulse energy $E_{fcr,k+1}$ as a product of the estimated maximum FCR-D pulse duration $t_{fcr_max}$ and the FCR-D power $P_{fcr,k+1}$, i.e. as $E_{fcr,k+1} = P_{fcr,k+1} \cdot t_{fcr_max}$. In an example, the estimated maximum FCR-D pulse duration $t_{fcr_max}$ may be also applied as an upper limit for a duration of the power pulse in the FCR-D up mode. Moreover, also the example of FFR operation described in the foregoing with references to Figure 5 applies to the FCR-D up mode as well, apart from application of the FCR-D power $P_{fcr,k}$, an incident pulse duration occurring in the respective time period and the lower FCR-D threshold frequency $f_{fcr_lo}$, respectively, instead of the FFR power $P_{ffr,k}$, the FFR pulse duration $t_{ffr}$ and the FFR threshold frequency $f_{ffr}$.

Referring now to the FCR-D down mode, in the course of operation in the FCR-D down mode the controller 122 may adjust the instantaneous charging power $P_{in}(t)$ in dependence of the observed AC frequency *f*(*t*) according to one or more of the following charging power adjustment rules:

- The currently applied instantaneous charging power $P_{in}(t)$ is kept constant in case the observed AC frequency *f*(*t*) is below the upper FCR-D threshold frequency $f_{fcr_hi}$.
- In case the observed AC frequency *f*(*t*) rises above the upper FCR-D threshold frequency $f_{fcr_hi}$, the currently applied instantaneous charging power $P_{in}(t)$ is increased until the observed AC frequency *f*(*t*) falls back below the upper FCR-D threshold frequency $f_{fcr_hi}$, after which the instantaneous charging power $P_{in}(t)$ is returned to its constant level, thereby absorbing a power pulse form the electrical grid 100 to the energy storage 121 to the electrical grid 100. As an example in this regard, the instantaneous charging power $P_{in}(t)$ during the power pulse may be decreased by the FCR-D power $P_{fcr,k}$.

In the FCR-D down mode, the controller 122 may adjust the instantaneous charging power $P_{in}(t)$ in view of the allowable SoC range, e.g. such the SoC level *C*(*t*) is kept within the allowable SoC range, as described in the foregoing in context of the FCR-N mode. In the FCR-D down mode, the one of more operating parameters of the PBR apparatus 120 for a time period *k* may comprise the following:

- the nominal charging power $P_{in_mid,k}$ (or the nominal discharging power $P_{out_mid,k}$);
- the FCR-D power $P_{fcr,k}$;

As described in the foregoing for the FCR-N mode, the nominal charging power $P_{in_mid,k}$ for the time period *k* may be considered as a virtual midpoint charging power or as a default charging power for the respective time period, which is applied as the instantaneous charging power $P_{in}(t)$ unless the observed AC frequency f(t) exceeds the upper FCR-D threshold frequency $f_{fcr_hi}$. In contrast, in case the observed AC frequency *f*(*t*) exceeds the upper FCR-D threshold frequency $f_{fcr_hi}$, the controller 122 increases the instantaneous charging power $P_{in}(t)$ by the FCR-D power $P_{fcr,k}$ and decreases the instantaneous charging power $P_{in}(t)$ back to the nominal charging power $P_{in_mid,k}$ when the observed AC frequency *f*(*t*) falls back below the upper FCR-D threshold frequency $f_{fcr_hi}$. Along the lines of the FCR-D up mode, the power pulse that may be absorbed in the FCR-D down mode does not have a predefined duration but the pulse may be continued as long as the observed AC frequency *f*(*t*) remains above the upper FCR-D threshold frequency $f_{fcr_hi}$, while the required reaction time for initiating absorption of the power pulse in response to the observed AC frequency *f*(*t*) rising above the upper FCR-D threshold thresholds $f_{fcr_hi}$ may be similar to that applied in the FCR-D up mode.

Derivation of the nominal charging power $P_{in_mid,k}$ for the time period k in the FFR mode is similar to that described in the foregoing for the FFR mode, *mutatis mutandis,* apart from different consideration of the power pulse, which in the case of FCR-D down mode involves the PBR apparatus 120 absorbing a power pulse from the electrical grid 100 instead of discharging one to the electrical grid 100 and which, consequently, sets a different requirement for an advantageous target SoC level $C_{tgt,k}$ at the end of the time period *k*: unlike in the FFR mode (and in the FCR-D up mode), an advantageous starting point for any time period of operation in the FCR-D down mode in terms of the initial SoC level $C_{st,k}$ is any SoC level that allows for a power pulse to be absorbed in the beginning of the respective time period without increasing the SoC level *C*(*t*) above the upper SoC limit $C_{max}$ while the same applies for the target SoC level $C_{tgt,k}$ at the end of the respective time period. Hence, in continued operation in the FCR-D down mode the target SoC level $C_{tgt,k}$ at the end of the time period *k* may be set to any value that enables absorption of a power pulse of the estimated maximum FCR-D pulse duration $t_{fcr_max}$ in the beginning of the next time period without increasing the SoC level $C(t)$ above the upper SoC limit $C_{max}$. Therefore, a suitable target SoC level $C_{tgt,k}$ is below the upper SoC limit $C_{max}$ by at least the amount the estimated FCR-D pulse energy $E_{fcr,k+1}$ described in the foregoing in context of the FCR-D up mode. In an example, the estimated maximum FCR-D pulse duration $t_{fcr_max}$ may be also applied as an upper limit for a duration of the power pulse in the FCR-D down mode. Hence, the highest SoC level that enables absorption of the power pulse may be computed as the sum of the lower SoC limit $C_{min}$ and the estimated FCR-D pulse energy $E_{fcr,k+1}$ (i.e. $C_{max}$ + $E_{fcr,k+1}$) and, consequently, the target SoC level $C_{tgt,k}$ may be set to a value that is smaller than or equal to $C_{min}$ + $E_{fcr,k+1}$.

Along the lines described in the foregoing for the FFR mode, if using the nominal charging power $P_{in_mid,k}$ derived according to the example described above, receiving electrical power at the energy storage 121 to absorb the power pulse to the electrical grid 100 during the time period *k* results in increase of the SoC level $C(t)$ and, consequently, results in a failure the reach the target SoC level $C_{tgt,k}$ at the end of the time period *k* unless the instantaneous charging power $P_{in}(t)$ for the remainder of the time period *k* is decreased to compensate for the increased SoC level $C(t)$. In an example, this may be accounted for by deriving the redefine nominal charging power $P'_{in_mid,k}$ for the remainder of the time period *k* after absorption of the power pulse in dependence of the SoC level $C(t)$ after absorption of the power pulse and the target SoC level $C_{tgt,k}$ such that redefined nominal charging power $P'_{in_mid,k}$ would result in reaching the target SoC level $C_{tgt,k}$ at the end of the time period *k* if no further power pulses are absorbed from the energy storage 121 during the remainder of the time period *k*. Hence, in this example the nominal charging power $P_{in_mid,k}$ is applied as the instantaneous charging power $P_{in}(t)$ before absorbing the power pulse and the instantaneous charging power $P_{in}(t)$ is adjusted to the redefined nominal charging power $P'_{in_mid,k}$ after the power pulse has been absorbed to ensure reaching the target SoC level $C_{tgt,k}$ at the end of the time period *k*. The redefined nominal charging power $P'_{in_mid,k}$ may be derived in a manner similar to that described in the foregoing for the FFR mode.

Further along the lines described for the FFR mode, in another example the sufficiently low SoC level $C(t)$ at the end of the time period *k* may be ensured via application of a further operating parameter for the FCR-D down mode: a temporary upper SoC limit $C_{max,k}$ may be applied instead of the upper SoC limit $C_{max}$ to define the highest allowable SoC level for the time period *k*. The temporary upper SoC limit $C_{max,k}$ may be also referred to as a virtual upper SoC limit. The temporary upper SoC limit $C_{max,k}$ applied for the time period *k* is smaller than the upper SoC limit $C_{max}$ (i.e. $C_{max,k} < C_{max}$). In particular, the temporary upper SoC limit $C_{max,k}$ may be set to a value that allows for a power pulse to be absorbed in the beginning of the time period *k+1* without increasing the SoC level $C(t)$ above the upper SoC limit $C_{max}$. In this regard, the temporary upper SoC limit $C_{max,k}$ may be set to a value that is smaller than the upper SoC limit $C_{max}$ by at least the amount of the estimated FCR-D pulse energy $E_{fcr,k+1}$, i.e. to a value that is smaller than or equal to $C_{max}$ - $E_{fcr,k+1}$. Consequently, application of the temporary upper SoC limit $C_{max,k}$ (instead of the upper SoC limit $C_{max}$) for the time period k ensures sufficiently low SoC level $C(t)$ at the beginning of the time period *k+1* and leaves some freedom in terms of reaching the target SoC level $C_{tgt,k}$ at the end of the time period k since observance of the temporary upper SoC limit $C_{max,k}$ guarantees sufficiently low SoC level $C(t)$ at the end of the time period *k*, thereby rendering derivation of the redefined nominal charging power $P'_{in_mid,k}$ during the time period *k* non-mandatory and/or allows for application of a redefined nominal charging power $P'_{in_mid,k}$ that is higher than that defined in the example described in the foregoing.

Like in the FFR mode, also in the FCR-D down mode the nominal charging power $P_{in_mid,k}$ for the time period *k* may be zero, below zero (which corresponds to discharging the energy storage 121), or above zero (which corresponds to charging the energy storage 121), depending on the relationship between the initial SoC level $C_{st,k}$ in the beginning of the time period *k* and the target SoC level $C_{tgt,k}$ at the end of the time period *k*. In this regard, it is worth noting that since the power actually absorbed to the energy storage 121 in the course of a power pulse is a combined power of the currently applied nominal charging power $P_{in_mid,k}$ and the FCR-D power $P_{fcr,k}$: in case the nominal charging power $P_{in_mid,k}$ is below zero, the total power absorbed to the energy storage 121 during a power pulse is actually lower than the FCR-D power $P_{fcr,k}$, whereas in case the nominal charging power $P_{in_mid,k}$ is above zero, the total power absorbed to the energy storage 121 during a power pulse is higher than the FCR-D power $P_{fcr,k}$, In the former case, assuming that the FCR-D power $P_{fcr,k}$ is larger than the below-zero nominal charging power $P_{in_mid,k}$, part of the power pulse actually arises from temporarily increasing the power consumption from the electrical grid 100 due to discharging of the energy storage 121 being temporarily discontinued for the FCR-D pulse duration $t_{fcr}$, whereas in case the FCR-D power $P_{fcr,k}$ is not larger than the below-zero nominal charging power $P_{in_mid,k}$, the power pulse is actually a virtual one that arises from temporary reduction of the discharging power supplied from the electrical grid 100 to the energy storage 121. Hence, with a suitable selection of the nominal charging power $P_{in_mid,k}$ and the FCR-D power $P_{fcr,k}$ it is actually possible to provide (at least partially) virtual power pulse that exceeds the charging capability of the energy storage 121.

Consequently, in the FCR-D down mode the controller 122 controls the transfer of electric power between the energy storage 121 and the electrical grid 100 (e.g. charging or discharging of the energy storage 121) during the time period k in accordance with operating parameters defined therefor, e.g. according to the nominal charging power $P_{in_mid,k}$, the FCR-D power $P_{fcr,k}$ and (optionally) the temporary upper SoC limit $C_{max,k}$. Since the transfer of electric power to and/or from the energy storage 121 during the time period *k* depends on occasions of the observed AC frequency *f*(*t*) of the electrical grid 100 exceeding the upper FCR-D threshold frequency $f_{fcr}$ that may occur in an unpredictable manner, the SoC level of the energy storage 121 during the time period *k* may likewise change in an unpredictable manner. Consequently the SoC level *C*(*t*) at the end of the time period *k*, and hence in the beginning of the time period *k+1*, may be taken into account in determination of the nominal charging power $P_{in_mid,k}$ for the time period *k+1* according to the examples described above (that pertain to determination of these operating parameters for the FCR-D mode of the PBR apparatus 120 for the time period *k*).

Graphs (i), (ii) and (iii) of Figure 6 illustrate a non-limiting example of respective changes in the observed AC frequency *f*(*t*), in the instantaneous charging power $P_{in}(t)$ and in the SoC level *C*(*t*) as a function of time during a time period in the FCR-D down mode. In the example of Figure 6, the graph (i) shows the AC frequency *f*(*t*) of the electrical grid 100 as a function of time, where the AC frequency *f*(*t*) remains close to the nominal system frequency $f_{mid}$ apart from rising above the upper FCR-D threshold frequency $f_{fcr_hi}$ for a short while. As described in the foregoing and illustrated in the graph (ii), the AC frequency *f*(*t*) rising above the upper FCR-D threshold frequency $f_{fcr_hi}$ results in absorbing a power pulse from the electrical grid 100 to the energy storage 121, where the instantaneous charging power $P_{in}(t)$ is increased by the amount defined by the FCR-D power $P_{fcr,k}$ for the time segment that has the FCR-D pulse duration $t_{fcr}$. Moreover, the graph (ii) further illustrates applying the nominal charging power $P_{in_mid,k}$ before absorbing the power pulse and application of the redefined nominal charging power $P'_{in_mid,k}$ (that is lower than the nominal charging power $P_{in_mid,k}$) after the power pulse has been absorbed. The graph (iii) illustrates two examples regarding the change in the SoC level *C(t)* of the energy storage 121 over time:

- The solid curve represents an example where the nominal charging power $P_{in_mid,k}$ is set to zero in order to keep the SoC level *C*(*t*) at the midpoint SoC level $C_{mid}$. In this example, due to the zero-valued nominal charging power $P_{in_mid,k}$ the SoC level *C*(*t*) remains at the midpoint SoC level $C_{mid}$ until absorbing the power pulse that increases the SoC level *C*(*t*) accordingly, whereas the redefined nominal charging power $P'_{in_mid,k}$ applied after absorbing the power pulse is lower than the nominal charging power $P_{in_mid,k}$ applied before absorption of the power pulse in order to bring the SoC level *C*(*t*) to the midpoint SoC level $C_{mid}$ (which in this example is the target SoC level $C_{tgt,k}$ at the end of the time period).
- The dashed curve represents an example where the nominal charging power $P_{in_mid,k}$ is set to a value that is below zero in order to bring the SoC level *C*(*t*) to the midpoint SoC level $C_{mid}$ at the end of the time period. In this example, due to the lower-than-zero nominal charging power $P_{in_mid,k}$ the SoC level *C*(*t*) constantly decreases until absorbing the power pulse that increases the SoC level *C*(*t*) accordingly, whereas the redefined nominal charging power $P'_{in_mid,k}$ applied after absorbing the power pulse is lower than the nominal charging power $P_{in_mid,k}$ applied before absorption of the power pulse in order to bring the SoC level *C*(*t*) to the midpoint SoC level $C_{mid}$ as the end of the time period.

As described in the foregoing, in other examples the nominal charging power $P_{in_mid,k}$ may be larger than zero, thereby constantly increasing the SoC level *C*(*t*) at a rate defined by the nominal charging power $P_{in_mid,k}$, whereas absorption of the power pulse due to the AC frequency *f*(*t*) rising above the upper FCR-D threshold frequency $f_{fcr_hi}$ results in temporarily charging the energy storage 121 at an increased rate, followed by application of the redefined nominal charging power $P'_{in_mid,k}$ (that is lower than the nominal charging power $P_{in_mid,k}$) to increase the SoC level *C*(*t*) at a reduced rate (in comparison to the nominal charging power $P_{in_mid,k}$) in order to bring the SoC level *C*(*t*) at the end of the time period to the midpoint SoC level $C_{mid}$ (or to another target SoC level $C_{tgt,k}$). In further examples, alternatively or additionally, the application the redefined nominal charging power $P'_{in_mid,k}$ after absorption of the power pulse (illustrated e.g. in the graph (ii) of Figure 6) may be omitted, thereby possibly resulting in a SoC level *C*(*t*) that is higher or lower than the midpoint SoC level $C_{mid}$ (or another target SoC level $C_{tgt,k}$) at the end of the time period.

In a second scenario, the PBR apparatus 120 may be arranged to operate according to one of a plurality of (e.g. two or more) operating modes in a plurality of consecutive time periods of the time schedule such that one of the available operating modes is selected for each of said consecutive time periods of the time schedule. The two or more operating modes may include two or more of the FCR-N mode, the FFR mode, the FCR-D up mode and the FCR-D down mode described in the foregoing. The applied operating modes and one or more of their operating parameters may be selected or set in advance. The pre-selection of the operating modes and/or their respective operating parameter values may be at least partially based, for example, on the agreement between the respective operators of the PBR apparatus 120 and the electrical grid 100. While the basic operation in each of the FCR-N mode, the FFR mode, the FCR-D up mode and the FCR-D down mode in the course of the second scenario is similar to that described in the first scenario, the knowledge of upcoming changes in operating mode enables enhancing operation of the PBR apparatus 120 via setting or adjusting at least one of the operating parameters of the PBR apparatus 120 for the time period $k$ in accordance of the respective operating modes selected for the time period $k$ and for subsequent time periods following the time period $k$.

As an example in this regard, in the framework of the second scenario the PBR apparatus 120 may operate according to a method 300 that is illustrated by a flowchart depicted in Figure 7. The method 300 proceeds from operating the PBR apparatus 120 to control transfer of electrical energy between the energy storage 121 and the electrical grid 100 in dependence of the observed AC frequency $f(t)$ of the electrical grid 100 in view of the minimum and maximum allowable SoC levels using one of a plurality of operating modes via adjustment of the instantaneous charging power $P_{in}(t)$ that indicates the amount of electric power currently transferred from the electrical grid 100 to the energy storage 121, as indicated in block 302. The method 300 further comprises receiving respective indications of a first operating mode selected for a first time period and a second operating mode selected for a second time period, where the first and second time periods are consecutive time periods in a sequence of time periods and where the second time period follows the first time period in said sequence, as indicated in block 304, and controlling the instantaneous charging power $P_{in}(t)$ during the first time period in accordance with the first operating mode in dependence of the observed AC frequency $f(t)$ and at least partially in dependence of the second operating mode selected for the second time period, as indicated in block 306. Respective operations described with references to blocks 302 to 306 pertaining to the method 300 may be implemented, varied and/or complemented in a number of ways, for example as described in the foregoing and in the following with references to the operation of the PBR apparatus 120.

Along the lines described in the foregoing, in each of the plurality of operating modes the applied nominal charging power $P_{in_mid,k}$ is derived in dependence of the initial SoC level $C_{st,k}$ in the beginning of the time period $k$ and the target SoC level $C_{tgt,k}$ at the end of the time period k, where definition or selection of the target SoC level $C_{tgt,k}$ may depend on the operating mode of the time period $k$+1. Hence, in this regard the aspect of controlling the instantaneous charging power $P_{in}(t)$ (cf. block 306) may comprise defining the target SoC level for the first time period at least partially in dependence of the second operating mode (selected for the second time period), deriving the nominal charging power $P_{in_mid,k}$ for the first time period at least in dependence of the initial SoC level $C_{st,k}$ in the beginning of the first time period and the target SoC level $C_{tgt,k}$ defined for the first time period, and controlling the instantaneous charging power $P_{in}(t)$ during the first time period in view of the nominal charging power $P_{in_mid,k}$ defined therefor in accordance with the charging power adjustment rules defined for the first operating mode.

As an example regarding a change from one mode of operation to another, in a scenario where the first operating mode (selected for the first time period) comprises the FCR-N mode and the second operating mode (selected for the second time period) comprises the FFR mode, the target SoC value $C_{tgt,k}$ at the end of the first time period may be set to a value that is larger than or equal to the sum of the lower SoC limit $C_{min}$ and the FFR pulse energy $E_{frr,k+1}$ (i.e. $C_{min} + E_{frr,k+1}$), thereby enabling the PBR apparatus 120 to discharge a power pulse in the beginning of the second time period (in case it turns out necessary) without decreasing the SoC level $C(t)$ below the lower SoC limit $C_{min}$ while allowing usage of above-zero nominal charging power for the second time period. Moreover, the target SoC value $C_{tgt,k}$ so derived is preferably smaller than the midpoint SoC value $C_{mid}$ while it may be within a predefined SoC margin $C_m$ from the lower SoC limit $C_{min}$. In this regard, the SoC margin $C_m$ may be defined such that corresponds to a predefined percentage of the overall capacity of the energy storage 121 (e.g. a suitable percentage in a range from 1 to 10 %). Consequently, selection of the target SoC level $C_{tgt,k}$ for the first time period in the FCR-N mode contributes towards providing an advantageous starting point for operation in the FFR mode in the second time period.

In another example pertaining to the transition from the FCR-N mode in the first time period to the FFR mode in the second time period, the operating parameters of the FCR-N mode may further comprise the temporary lower SoC limit $C_{min,k}$ described in the foregoing in context of the FFR mode. As described therein, the temporary lower SoC limit $C_{min,k}$ may be set to a value that is larger than or equal to the sum of the lower SoC limit $C_{min}$ and the FFR pulse energy $E_{frr,k+1}$, thereby ensuring sufficient SoC level $C(t)$ that allows for a power pulse to be discharged from the energy storage 121 in the beginning of the second time period (if it turns out necessary) without decreasing the SoC level $C(t)$ below the lower SoC limit $C_{min}$. Consequently, application of the temporary lower SoC limit $C_{min,k}$ during the first time period in the FCR-N mode guarantees that the PBR apparatus 120 is able to validly operate in the FFR mode in the second time period.

The above-described example that pertains to a change from the FCR-N mode in the first time period to the FFR mode in the second time period applies to a transition from the FCR-N mode to the FCR-D up mode as well, *mutatis mutandis*, with the exception that the estimated FCR-D pulse energy $E_{fcr,k+1}$ is considered instead of the FFR pulse energy $E_{frr,k+1}$ in derivation of the target SoC level $C_{tgt,k}$ at the end of the first time period or in derivation of the temporary lower SoC limit $C_{min,k}$ (whichever applies).

In a further example regarding a change from one mode of operation to another, in a scenario where the first operating mode (selected for the first time period) comprises the FCR-N mode and the second operating mode (selected for the second time period) comprises the FCR-D down mode, the target SoC value $C_{tgt,k}$ at the end of the first time period may be set to a value that is smaller than or equal to a SoC level computed by subtracting the estimated FCR-D pulse energy $E_{fcr,k+1}$ from the upper SoC limit $C_{max}$ (i.e. $C_{max}$ - $E_{fcr,k+1}$), thereby enabling the PBR apparatus 120 to absorb a power pulse in the beginning of the second time period (in case it turns out necessary) without increasing the SoC level $C(t)$ above the upper SoC limit $C_{max}$ while allowing usage of below-zero nominal charging power for the second time period. Moreover, the target SoC value $C_{tgt,k}$ so derived is preferably larger than the midpoint SoC value $C_{mid}$ while it may be within the predefined SoC margin $C_m$ from the upper SoC limit $C_{max}$. In this regard, the SoC margin $C_m$ may be defined in a manner similar to that described in the foregoing for transition from the FCR-N mode to the FFR mode. Consequently, selection of the target SoC level $C_{tgt,k}$ for the first time period in the FCR-N mode contributes towards providing an advantageous starting point for operation in the FCR-D down mode in the second time period.

In another example pertaining to the transition from the FCR-N mode in the first time period to the FCR-D down mode in the second time period, the operating parameters of the FCR-N mode may further comprise the temporary upper SoC limit $C_{min,k}$ described in the foregoing in context of the FCR-D down mode. As described therein, the temporary upper SoC limit $C_{min,k}$ may be set to value that is smaller than or equal to a SoC level computed by subtracting the estimated FCR-D pulse energy $E_{fcr,k+1}$ from the upper SoC limit $C_{max}$ (i.e. $C_{max}$ - $E_{fcr,k+1}$), thereby ensuring sufficient SoC level $C(t)$ that allows for a power pulse to be absorbed to the energy storage 121 in the beginning of the second time period (if it turns out necessary) without increasing the SoC level $C(t)$ above the upper SoC limit $C_{max}$. Consequently, application of the temporary upper SoC limit $C_{max,k}$ during the first time period in the FCR-N mode guarantees that the PBR apparatus 120 is able to validly operate in the FCR-D down mode in the second time period.

In a further example regarding a change from one mode of operation to another, in a scenario where the first operating mode (selected for the first time period) comprises the FFR mode and the second operating mode (selected for the second time period) comprises the FCR-N mode, the target SoC level $C_{tgt,k}$ at the end of the first time period may be set to the midpoint SoC value $C_{mid}$ or to a value within the predefined SoC margin $C_m$ centered at the midpoint SoC value $C_{mid}$ (where the SoC margin $C_m$ may be defined in a manner similar to that described in the foregoing). Along the lines described in the foregoing, having the SoC level $C(t)$ at or relatively close the midpoint SoC level $C_{mid}$ provides an advantageous starting point for the second time period in the FCR-N mode via enabling an equal or substantially equal amount of charging or discharging of the energy storage 121 to be applied while keeping the SoC level $C(t)$ with the allowable SoC range. In a scenario where the initial SoC level $C_{st,k}$ in the beginning of the first time period in the FFR mode is close to the lower SoC limit $C_{min}$ or at least below the midpoint SoC level $C_{mid}$, this may also result in setting the nominal charging power $P_{in_mid,k}$ for the first time period to a positive value (i.e. one that results in charging the energy storage 121), which in turn may enable provision of (at least partially) virtual power pulses that exceed the discharging capability of the energy storage 121 (as described in the foregoing) during the first time period.

The above-described example that pertains to a change from the FFR mode in the first time period to the FCR-N mode in the second time period applies to a transition from the FCR-D up mode to the FCR-N mode and to a transition from the FCR-D down mode to the FRC-N mode as well, *mutatis mutandis.*

In a further example regarding a change from one mode of operation to another, in a scenario where the first operating mode (selected for the first time period) comprises the FFR mode and the second operating mode (selected for the second time period) comprises the FCR-D down mode, the target SoC value $C_{tgt,k}$ at the end of the time period $k$ may be set to a value that is smaller than or equal to a SoC level computed by subtracting the estimated FCR-D pulse energy $E_{fcr,k+1}$ from the upper SoC limit $C_{max}$ (i.e. $C_{max}$ - $E_{fcr,k+1}$), thereby enabling the PBR apparatus 120 to absorb a power pulse in the beginning of the second time period (in case it turns out necessary) without increasing the SoC level $C(t)$ above the upper SoC limit $C_{max}$ while allowing usage of below-zero nominal charging power for the second time period. Moreover, the target SoC value $C_{tgt,k}$ so derived is preferably larger than the midpoint SoC value $C_{mid}$ while it may be within the predefined SoC margin $C_m$ from the upper SoC limit $C_{max}$. Consequently, selection

of the target SoC level $C_{tgt,k}$ for the first time period in the FFR mode contributes towards providing an advantageous starting point for operation in the FCR-D down mode in the second time period.

In another example pertaining to the transition from the FFR mode in the first time period to the FCR-D down mode in the second time period, the operating parameters of the FFR mode may further comprise the temporary upper SoC limit $C_{max,k}$ described in the foregoing in context of the FCR-D down mode. As described therein, the temporary upper SoC limit $C_{max,k}$ may be set to a value that is smaller than or equal to a SoC level computed by subtracting the estimated FCR-D pulse energy $E_{fcr,k+1}$ from the upper SoC limit $C_{max}$ (i.e. $C_{max}$ - $E_{fcr,k}$), thereby ensuring sufficient SoC level $C(t)$ that allows for a power pulse to be absorbed to the energy storage 121 in the beginning of the second time period (if it turns out necessary) without increasing the SoC level $C(t)$ above the upper SoC limit $C_{max}$. Consequently, application of the temporary upper SoC limit $C_{max,k}$ during the first time period in the FCR-N mode guarantees that the PBR apparatus 120 is able to validly operate in the FCR-D down mode in the second time period.

The above-described example that pertains to a change from the FFR mode in the first time period to the FCR-D down mode in the second time period applies to a transition from the FCR-D up mode to the FCR-D down mode as well, *mutatis mutandis.*

As a further example regarding a change from one mode of operation to another, in a scenario where the first operating mode (selected for the first time period) comprises the FCR-D down mode and the second operating mode (selected for the second time period) comprises the FFR mode, the target SoC value $C_{tgt,k}$ at the end of the first time period may be set to a value that is larger than or equal to the sum of the lower SoC limit $C_{min}$ and the FFR pulse energy $E_{frr,k+1}$ (i.e. $C_{min} + E_{frr,k+1}$), thereby enabling the PBR apparatus 120 to discharge a power pulse in the beginning of the second time period (in case it turns out necessary) without decreasing the SoC level $C(t)$ below the lower SoC limit $C_{min}$ while allowing usage of above-zero nominal charging power for the second time period. Moreover, the target SoC value $C_{tgt,k}$ so derived is preferably smaller than the midpoint SoC value $C_{mid}$ while it may be within the predefined SoC margin $C_m$ from the lower SoC limit $C_{min}$. Consequently, selection of the target SoC level $C_{tgt,k}$ for the first time period in the FCR-D down mode contributes towards providing an advantageous starting point for operation in the FFR mode in the second time period.

In another example pertaining to the transition from the FCR-D down mode in the first time period to the FFR mode in the second time period, the operating parameters of the FCR-D down mode may further comprise the temporary lower SoC limit $C_{min,k}$ described in the foregoing in context of the FFR mode. As described therein, the temporary lower SoC limit $C_{min,k}$ may be set to a value that is larger than or equal to the sum of the lower SoC limit $C_{min}$ and the FFR pulse energy $E_{frr,k+1}$, thereby ensuring sufficient SoC level $C(t)$ that allows for a power pulse to be discharged from the energy storage 121 in the beginning of the second time period (if it turns out necessary) without decreasing the SoC level $C(t)$ below the lower SoC limit $C_{min}$. Consequently, application of the temporary lower SoC limit $C_{min,k}$ during the first time period in the FCR-D down mode guarantees that the PBR apparatus 120 is able to validly operate in the FFR mode in the second time period.

The above-described example that pertains to a change from the FCR-D down mode in the first time period to the FFR mode in the second time period applies to a transition from the FCR-D down mode to the FCR-D up mode as well, *mutatis mutandis,* with the exception that the estimated FCR-D pulse energy $E_{fcr,k+1}$ is considered instead of the FFR pulse energy $E_{frr,k+1}$ in derivation of the target SoC level $C_{tgt,k}$ at the end of the first time period or in the derivation of the temporary lower SoC limit $C_{min,k}$ (whichever applies).

Figure 8 schematically illustrates some components of an apparatus 400 that may be employed to implement the controller 122. The apparatus 400 comprises a processor 402 and a memory 404. The memory 404 may store data and computer program code 406. The apparatus 400 may further comprise communication means 408 for wired or wireless communication with other apparatuses and/or user I/O (input/output) components 410 that may be arranged, together with the processor 402 and a portion of the computer program code 406, to provide a user interface for receiving input from a user and/or providing output to the user. In particular, the user I/O components may include user input means, such as one or more keys or buttons, a keyboard, a touchscreen or a touchpad, etc. The user I/O components may include output means, such as a display or a touchscreen. The components of the apparatus 400 are communicatively coupled to each other via a bus 412 that enables transfer of data and control information between the components.

The memory 404 and a portion of the computer program code 406 stored therein may be further arranged, with the processor 402, to cause the apparatus 400 to perform at least some aspects of operation of the controller 122. The processor 402 is configured to read from and write to the memory 404. Although the processor 402 is depicted as a respective single component, it may be implemented as respective one or more separate processing components. Similarly, although the memory 404 is depicted as a respective single component, it may be implemented as respective one or more separate components, some or all of which may be integrated/removable and/or may provide permanent / semi-permanent/ dynamic/cached storage.

The computer program code 406 may comprise computer-executable instructions that implement at least some aspects of operation of the controller 122 when loaded into the processor 402. As an example, the computer program code 406 may include a computer program consisting of one or more sequences of one or more instructions. The processor 402 is able to load and execute the computer program by reading the one or more sequences of one or more instructions included therein from the memory 404. The one or more sequences of one or more instructions may be configured to, when executed by the processor 402, cause the apparatus 400 to perform at least some aspects of operation of the controller 122. Hence, the apparatus 400 may comprise at least one processor 402 and at least one memory 404 including the computer program code 406 for one or more programs, the at least one memory 404 and the computer program code 406 configured to, with the at least one processor 402, cause the apparatus 400 to perform at least some aspects of operation of the controller 122.

The computer program code 406 may be provided e.g. a computer program product comprising at least one computer-readable non-transitory medium having the computer program code 406 stored thereon, which computer program code 406, when executed by the processor 402 causes the apparatus 400 to perform at least some aspects of operation of the controller 122. The computer-readable non-transitory medium may comprise a memory device or a record medium such as a CD-ROM, a DVD, a Blu-ray disc or another article of manufacture that tangibly embodies the computer program. As another example, the computer program may be provided as a signal configured to reliably transfer the computer program.

Reference(s) to a processor herein should not be understood to encompass only programmable processors, but also dedicated circuits such as field-programmable gate arrays (FPGA), application specific circuits (ASIC), signal processors, etc.

## Claims

1. A power balancing reserve, PBR, apparatus (120) for an electrical grid (100), the PBR apparatus (120) comprising:

    an energy storage (121) for storing electrical energy and having a minimum allowable state of charge, SoC, level and a maximum allowable SoC level defined therefor; and
    a controller (122) for controlling transfer of electrical energy between the energy storage (121) and the electrical grid (100) in dependence of an observed AC frequency of the electrical grid (100) in view of said minimum and maximum allowable SoC levels using one of a plurality of operating modes via adjustment of an instantaneous charging power that indicates the amount of electric power currently transferred from the electrical grid (100) to the energy storage (121),
    **characterized in that** the controller (122) is arranged to:

        receive, before starting a first time period, respective indications of a first operating mode selected for said first time period and a second operating mode selected for a second time period, where the first and second time periods are consecutive time periods in a sequence of time periods of predefined duration and where the second time period follows the first time period in said sequence, and
        control the instantaneous charging power during the first time period in accordance with one or more power adjustment rules defined for the first operating mode, wherein said controlling is carried out according to a predefined schedule and in dependence of said observed AC frequency,
        wherein the controller (122) is arranged to:

            define, before starting the first time period, a target state of charge, SoC, level of the energy storage (121) for the end of the first time period at least partially in dependence of the second operating mode selected for the second time period;
            derive, before starting the first time period, a first nominal charging power for the first time period at least in dependence of an initial SoC level of the energy storage (121) in the beginning of the first time period and said target SoC level; and
            control, during the first time period according to said predefined schedule, the instantaneous charging power during the first time period in view of the first nominal charging power in accordance with the one or more charging power adjustment rules defined for the first operating mode.

2. A PBR apparatus (120) according to claim 1,

    wherein said one or more charging power adjustment rules for the first operating mode define setting the instantaneous charging power to the first nominal charging power in response to the observed AC frequency substantially matching a nominal system frequency of the electrical grid (100), setting the instantaneous charging power to a value that is smaller than the first nominal charging power in response to the observed AC frequency being below the nominal system frequency, and setting the instantaneous charging power to a value that is larger than the first nominal charging power in response to the observed AC frequency exceeding the nominal system frequency;

wherein said one or more charging power adjustment rules for the second operating mode define setting the instantaneous charging power to a second nominal charging power in response to the observed AC frequency being above a predefined frequency threshold that is lower than the nominal system frequency and decreasing the instantaneous charging power by a predefined amount in response the observed AC frequency falling below said predefined frequency threshold; and

wherein the controller (122) is arranged to define said target SoC level such that it is larger than or equal to a sum of said minimum allowable SoC level and a pulse energy defined by said predefined amount of change in the instantaneous charging power for a time segment of predefined duration.

**3.** A PBR apparatus (120) according to claim 2, wherein the controller (122) is arranged to define said target SoC level such that it is smaller than an average of said minimum and maximum allowable SoC levels.

**4.** A PBR apparatus (120) according to claim 1,

wherein said one or more charging power adjustment rules for the first operating mode define setting the instantaneous charging power to the first nominal charging power in response to the observed AC frequency substantially matching a nominal system frequency of the electrical grid (100), setting the instantaneous charging power to a value that is smaller than the first nominal charging power in response to the observed AC frequency being below the nominal system frequency, and setting the instantaneous charging power to a value that is larger than the first nominal charging power in response to the observed AC frequency exceeding the nominal system frequency;

wherein said one or more charging power adjustment rules for the second operating mode define setting the instantaneous charging power to a second nominal charging power in response to the observed AC frequency being below a predefined frequency threshold that is higher than the nominal system frequency and increasing the instantaneous charging power by a predefined amount in response the observed AC frequency exceeding said predefined frequency threshold; and

wherein the controller (122) is arranged to define said target SoC level such that it is smaller than or equal to a SoC level computed by subtracting a pulse energy defined by said predefined amount of change in the instantaneous charging power for a time segment of predefined duration from said maximum allowable SoC level.

**5.** A PBR apparatus (120) according to claim 4, wherein the controller (122) is arranged to define said target SoC level such that it is larger than an average of said minimum and maximum allowable SoC levels.

**6.** A PBR apparatus (120) according to any of claims 1 to 5, wherein the controller (122) is arranged to derive the first nominal charging power further in dependence of an estimated balancing energy required for the first time period, said estimated balancing energy derived based on predicted AC frequency in the first time period, wherein the predicted AC frequency is derived based on past values of the observed AC frequency.

**7.** A PBR apparatus (120) according to claim 6, wherein the controller (122) is arranged to derive the first nominal charging power according to one of the following approaches:

computing a difference between the target SoC level and the initial SoC level and computing the first nominal charging power via dividing a sum of said difference and the estimated balancing energy by the duration of the first time period;

computing an adjusted target SoC level as a sum of the target SoC level and the estimated balancing energy and computing the first nominal charging power via dividing a difference between the adjusted target SoC level and the initial SoC level by the duration of the time period.

**8.** A PBR apparatus (120) according to claim 1,

wherein said one or more charging power adjustment rules for the first operating mode define setting the instantaneous charging power to the first nominal charging power in response to the observed AC frequency being above a predefined frequency threshold that is lower than the nominal system frequency and decreasing the instantaneous charging power by a predefined amount in response the observed AC frequency falling below said predefined frequency threshold;

wherein said one or more charging power adjustment rules for the second operating mode define setting the instantaneous charging power to a second nominal charging power in response to the observed AC frequency substantially matching a nominal system frequency of the electrical grid (100), setting the instantaneous charging power to a value that is smaller than the second nominal charging power in response to the observed AC frequency being below the nominal system frequency, and setting the instantaneous charging power to a value that is larger than the second nominal charging power in response to the observed AC frequency exceeding the nominal system frequency; and

wherein the controller (122) is arranged to define said target SoC level as an average of the minimum allowable SoC level and the maximum allowable SoC level.

**9.** A PBR apparatus (120) according to claim 1,

wherein said one or more charging power adjustment rules for the first operating mode define setting the instantaneous charging power to the first nominal charging power in response to the observed AC frequency being below a predefined frequency threshold that is higher than the nominal system frequency and increasing the instantaneous charging power by a predefined amount in response the observed AC frequency exceeding said predefined frequency threshold;

wherein said one or more charging power adjustment rules for the second operating mode define setting the instantaneous charging power to a second nominal charging power in response to the observed AC frequency substantially matching a nominal system frequency of the electrical grid (100), setting the instantaneous charging power to a value that is smaller than the second nominal charging power in response to the observed AC frequency being below the nominal system frequency, and setting the instantaneous charging power to a value that is larger than the second nominal charging power in response to the observed AC frequency exceeding the nominal system frequency; and

wherein the controller (122) is arranged to define said target SoC level as an average of the minimum allowable SoC level and the maximum allowable SoC level.

**10.** A PBR apparatus (120) according to claim 1,

wherein said one or more charging power adjustment rules for the first operating mode define setting the instantaneous charging power to the first nominal charging power in response to the observed AC frequency being above a first predefined frequency threshold that is lower than the nominal system frequency and decreasing the instantaneous charging power by a predefined first amount in response the observed AC frequency falling below said first predefined frequency threshold;

wherein said one or more charging power adjustment rules for the second operating mode define setting the instantaneous charging power to a second nominal charging power in response to the observed AC frequency being below a second predefined frequency threshold that is higher than the nominal system frequency and increasing the instantaneous charging power by a predefined second amount in response the observed AC frequency exceeding said predefined second frequency threshold; and

wherein the controller (122) is arranged to define said target SoC level such that it is smaller than or equal to a SoC level computed by subtracting a pulse energy defined by said predefined second amount of change in the instantaneous charging power for a time segment of predefined duration from said maximum allowable SoC level.

**11.** A PBR apparatus (120) according to claim 10, wherein the controller (122) is arranged to define said target SoC level such that it is larger than an average of said minimum and maximum allowable SoC levels.

**12.** A PBR apparatus (120) according to claim 1,

wherein said one or more charging power adjustment rules for the first operating mode define setting the instantaneous charging power to the first nominal charging power in response to the observed AC frequency being below a first predefined frequency threshold that is higher than the nominal system frequency and increasing the instantaneous charging power by a predefined first amount in response the observed AC frequency exceeding said first predefined frequency threshold;

wherein said one or more charging power adjustment rules for the second operating mode define setting the instantaneous charging power to a second nominal charging power in response to the observed AC frequency being above a second predefined frequency threshold that is lower than the nominal system frequency and decreasing the instantaneous charging power by a predefined second amount in response the observed AC frequency falling below said second predefined frequency threshold; and

wherein the controller (122) is arranged to define said target SoC level such that it is larger than or equal to a sum of said minimum allowable SoC level and a pulse energy defined by said predefined second amount of change in the instantaneous charging power for a time segment of predefined second duration.

**13.** A PBR apparatus (120) according to claim 12, wherein the controller (122) is arranged to define said target SoC level such that it is smaller than an average of said minimum and maximum allowable SoC levels.

**14.** A PBR apparatus (120) according to any of claims 2 to 13,

wherein, depending on the instantaneous charging power before a change therein, decreasing the instantaneous charging power includes one of the following: continue charging at a reduced rate, change from charging to discharging, continue discharging at an increased discharging rate; and/or
wherein, depending on the instantaneous charging power before a change therein, increasing the instantaneous charging power includes one of the following: continue charging at an increased rate, change from discharging to charging, continue discharging at a reduced discharging rate.

**15.** A method (300) for providing a power balancing reserve, PBR, for an electrical grid (100), the method (300) comprising:

storing electrical energy in an energy storage (121) that has a minimum state of charge, SoC, level and a maximum SoC level defined therefor;
controlling (302) transfer of electrical energy between the energy storage (121) and the electrical grid (100) in dependence of an observed AC frequency of the electrical grid (100) in view of said minimum and maximum allowable SoC levels using one of a plurality of operating modes via adjustment of an instantaneous charging power that indicates the amount of electric power currently transferred from the electrical grid (100) to the energy storage (121);
**characterized in that** the method (300) comprises:

receiving (304), before starting a first time period, respective indications of a first operating mode selected for said first time period and a second operating mode selected for a second time period, where the first and second time periods are consecutive time periods in a sequence of time periods of predefined duration and where the second time period follows the first time period in said sequence; and
controlling (306) the instantaneous charging power during the first time period in accordance with one or more power adjustment rules defined for the first operating mode, wherein said controlling is carried out according to a predefined schedule and in dependence of said observed AC frequency, wherein said controlling (306) comprises:

defining, before starting the first time period, a target state of charge, SoC, level of the energy storage (121) for the end of the first time period at least partially in dependence of the second operating mode selected for the second time period;
deriving, before starting the first time period, a first nominal charging power for the first time period at least in dependence of an initial SoC level of the energy storage (121) in the beginning of the first time period and said target SoC level; and
controlling, during the first time period according to said predefined schedule, the instantaneous charging power during the first time period in view of the first nominal charging power in accordance with the one or more charging power adjustment rules defined for the first operating mode.

**16.** A computer program comprising computer readable program code for providing a power balancing reserve, PBR, for an electrical grid (100) using a PBR apparatus (120) that comprises

an energy storage (121) for storing electrical energy and having a minimum allowable state of charge, SoC, level and a maximum allowable SoC level defined therefor; and
a controller (122) for controlling transfer of electrical energy between the energy storage (121) and the electrical grid (100) in dependence of an observed AC frequency of the electrical grid (100) in view of said minimum and maximum allowable SoC levels using one of a plurality of operating modes via adjustment of an instantaneous charging power that indicates the amount of electric power currently transferred from the electrical grid (100) to the energy storage (121),
**characterized in that** the computer program is configured to cause the PBR apparatus (120) to carry out the following when said program code is run on said controller (122):

receive, before starting a first time period, respective indications of a first operating mode selected for said first time period and a second operating mode selected for a second time period, where the first and second time periods are consecutive time periods in a sequence of time periods of predefined duration and where the second time period follows the first time period in said sequence, and

control the instantaneous charging power during the first time period in accordance with one or more power adjustment rules defined for the first operating mode, wherein said controlling is carried out according to a predefined schedule and in dependence of said observed AC frequency, wherein said controlling comprises:

defining, before starting the first time period, a target state of charge, SoC, level of the energy storage (121) for the end of the first time period at least partially in dependence of the second operating mode selected for the second time period;

deriving, before starting the first time period, a first nominal charging power for the first time period at least in dependence of an initial SoC level of the energy storage (121) in the beginning of the first time period and said target SoC level; and

controlling, during the first time period according to said predefined schedule, the instantaneous charging power during the first time period in view of the first nominal charging power in accordance with the one or more charging power adjustment rules defined for the first operating mode.

## Patentansprüche

**1.** Leistungsausgleichsreservevorrichtung, PBR-Vorrichtung, (120) für ein Stromnetz (100), wobei die PBR-Vorrichtung (120) umfasst:

einen Energiespeicher (121) zum Speichern von elektrischer Energie mit einem dafür definierten minimal zulässigen SoC-Pegel (State of Charge) und einem maximal zulässigen SoC-Pegel; und

eine Steuerung (122) zum Steuern der Übertragung von elektrischer Energie zwischen dem Energiespeicher (121) und dem Stromnetz (100) in Abhängigkeit von einer beobachteten Wechselstromfrequenz des Stromnetzes (100) im Hinblick auf die minimal und maximal zulässigen SoC-Pegel unter Verwendung eines von mehreren Betriebsmodi durch Anpassung einer momentanen Ladeleistung, die die Menge an elektrischer Leistung angibt, die derzeit vom Stromnetz (100) zum Energiespeicher (121) übertragen wird,

**dadurch gekennzeichnet, dass** die Steuerung (122) angeordnet ist um:

vor Beginn einer ersten Zeitspanne jeweilige Angaben zu einem für die erste Zeitspanne ausgewählten ersten Betriebsmodus und einem für eine zweite Zeitspanne ausgewählten zweiten Betriebsmodus zu empfangen, wobei die erste und die zweite Zeitspanne aufeinanderfolgende Zeitspannen in einer Folge von Zeitspannen mit vordefinierter Dauer sind und wobei die zweite Zeitspanne in dieser Folge auf die erste Zeitspanne folgt, und

die momentane Ladeleistung während der ersten Zeitspanne in Übereinstimmung mit einer oder mehreren Leistungsanpassungsregeln, die für den ersten Betriebsmodus definiert sind, zu steuern, wobei das Steuern gemäß einem vordefinierten Zeitplan und in Abhängigkeit von der beobachteten Wechselstromfrequenz durchgeführt wird, wobei die Steuerung (122) angeordnet ist um:

vor Beginn der ersten Zeitspanne einen Ziel-Ladezustand-Pegel, SoC-Pegel, des Energiespeichers (121) für das Ende der ersten Zeitspanne zumindest teilweise in Abhängigkeit von dem für die zweite Zeitspanne gewählten zweiten Betriebsmodus zu definieren;

vor Beginn der ersten Zeitspanne eine erste Nennladeleistung für die erste Zeitspanne zumindest in Abhängigkeit von einem anfänglichen SoC-Pegel des Energiespeichers (121) zu Beginn der ersten Zeitspanne und dem Ziel-SoC-Pegel abzuleiten; und

während der ersten Zeitspanne gemäß dem vordefinierten Zeitplan die momentane Ladeleistung in der ersten Zeitspanne im Hinblick auf die erste Nennladeleistung in Übereinstimmung mit einer oder mehreren für den ersten Betriebsmodus definierten Regeln zur Anpassung der Ladeleistung zu steuern.

**2.** PBR-Vorrichtung (120) nach Anspruch 1,

wobei die eine oder mehrere Regeln zur Anpassung der Ladeleistung für den ersten Betriebsmodus das Einstellen der momentanen Ladeleistung auf die erste Nennladeleistung als Reaktion darauf, dass die beobachtete Wechselstromfrequenz im Wesentlichen mit einer Nennsystemfrequenz des Stromnetzes (100) übereinstimmt, das Einstellen der momentanen Ladeleistung auf einen Wert, der kleiner als die erste Nennladeleistung ist, als Reaktion darauf, dass die beobachtete Wechselstromfrequenz unter der Nennsystemfrequenz liegt, und das Einstellen der momentanen Ladeleistung auf einen Wert, der größer als die erste Nennladeleistung ist, als Reaktion darauf, dass die beobachtete Wechselstromfrequenz die Nennsystemfrequenz überschreitet, definieren;

wobei die eine oder mehrere Regeln zur Anpassung der Ladeleistung für den zweiten Betriebsmodus das Einstellen der momentanen Ladeleistung auf eine zweite Nennladeleistung als Reaktion darauf definieren, dass die beobachtete Wechselstromfrequenz über einem vordefinierten Frequenzschwellenwert liegt, der niedriger ist als die Nennsystemfrequenz, und das Verringern der momentanen Ladeleistung um einen vordefinierten Betrag als Reaktion darauf, dass die beobachtete Wechselstromfrequenz unter den vordefinierten Frequenzschwellenwert fällt; und

wobei die Steuerung (122) angeordnet ist, um den Ziel-SoC-Pegel so zu definieren, dass er größer als oder gleich einer Summe des minimal zulässigen SoC-Pegels und einer Impulsenergie ist, die durch den vordefinierten Betrag der Veränderung der momentanen Ladeleistung für ein Zeitsegment von vordefinierter Dauer definiert ist.

**3.** PBR-Vorrichtung (120) nach Anspruch 2, wobei die Steuerung (122) angeordnet ist, um den Ziel-SoC-Pegel so zu definieren, dass er kleiner ist als ein Mittelwert der minimal und maximal zulässigen SoC-Pegel.

**4.** PBR-Vorrichtung (120) nach Anspruch 1,

wobei die eine oder mehrere Regeln zur Anpassung der Ladeleistung für den ersten Betriebsmodus das Einstellen der momentanen Ladeleistung auf die erste Nennladeleistung als Reaktion darauf, dass die beobachtete Wechselstromfrequenz im Wesentlichen mit einer Nennsystemfrequenz des Stromnetzes (100) übereinstimmt, das Einstellen der momentanen Ladeleistung auf einen Wert, der kleiner als die erste Nennladeleistung ist, als Reaktion darauf, dass die beobachtete Wechselstromfrequenz unter der Nennsystemfrequenz liegt, und das Einstellen der momentanen Ladeleistung auf einen Wert, der größer als die erste Nennladeleistung ist, als Reaktion darauf, dass die beobachtete Wechselstromfrequenz die Nennsystemfrequenz überschreitet;

wobei die eine oder mehreren Regeln zur Anpassung der Ladeleistung für den zweiten Betriebsmodus das Einstellen der momentanen Ladeleistung auf eine zweite Nennladeleistung als Reaktion darauf definieren, dass die beobachtete Wechselstromfrequenz unter einem vordefinierten Frequenzschwellenwert liegt, der höher ist als die Nennsystemfrequenz, und das Erhöhen der momentanen Ladeleistung um einen vordefinierten Betrag als Reaktion darauf, dass die beobachtete Wechselstromfrequenz den vordefinierten Frequenzschwellenwert überschreitet; und

wobei die Steuerung (122) angeordnet ist, um den Ziel-SOC-Pegel so zu definieren, dass er kleiner oder gleich einem SoC-Pegel ist, der durch Subtraktion einer Impulsenergie, die durch den vordefinierten Betrag der Veränderung der momentanen Ladeleistung für ein Zeitsegment von vordefinierter Dauer definiert ist, von dem maximal zulässigen SoC-Pegel berechnet wird.

**5.** PBR-Vorrichtung (120) nach Anspruch 4, wobei die Steuerung (122) angeordnet ist, um den Ziel-SoC-Pegel so zu definieren, dass er größer ist als ein Mittelwert der minimal und maximal zulässigen SoC-Pegel.

**6.** PBR-Vorrichtung (120) nach einem der Ansprüche 1 bis 5, wobei die Steuerung (122) angeordnet ist, um die erste Nennladeleistung ferner in Abhängigkeit von einer geschätzten Ausgleichsenergie abzuleiten, die für die erste Zeitspanne erforderlich ist, wobei die geschätzte Ausgleichsenergie basierend auf der vorhergesagten Wechselstromfrequenz in der ersten Zeitspanne abgeleitet wird, wobei die vorhergesagte Wechselstromfrequenz basierend auf vergangenen Werten der beobachteten Wechselstromfrequenz abgeleitet wird.

**7.** PBR-Vorrichtung (120) nach Anspruch 6, wobei die Steuerung (122) angeordnet ist, um die erste Nennladeleistung nach einem der folgenden Ansätze abzuleiten:

Berechnen einer Differenz zwischen dem Ziel-SoC-Pegel und dem anfänglichen SoC-Pegel und Berechnen der ersten Nennladeleistung durch Dividieren einer Summe aus dieser Differenz und der geschätzten Ausgleichsenergie durch die Dauer der ersten Zeitspanne;

Berechnen eines angepassten Ziel-SoC-Pegels als Summe des Ziel-SoC-Pegels und der geschätzten Ausgleichsenergie und Berechnen der ersten Nennladeleistung durch Dividieren einer Differenz zwischen dem angepassten Ziel-SoC-Pegel und dem anfänglichen SoC-Pegel durch die Dauer der Zeitspanne.

**8.** PBR-Vorrichtung (120) nach Anspruch 1,

wobei die eine oder mehrere Regeln zur Anpassung der Ladeleistung für den ersten Betriebsmodus das Einstellen der momentanen Ladeleistung auf die erste Nennladeleistung als Reaktion darauf definieren, dass die beobachtete Wechselstromfrequenz über einem vordefinierten Frequenzschwellenwert liegt, der niedriger ist als die Nennsystemfrequenz, und das Verringern der momentanen Ladeleistung um einen vordefinierten Betrag als Reaktion darauf, dass die beobachtete Wechselstromfrequenz unter den vordefinierten Frequenzschwellenwert fällt;
wobei die eine oder mehrere Regeln zur Anpassung der Ladeleistung für den zweiten Betriebsmodus das Einstellen der momentanen Ladeleistung auf eine zweite Nennladeleistung als Reaktion darauf, dass die beobachtete Wechselstromfrequenz im Wesentlichen mit einer Nennsystemfrequenz des Stromnetzes (100) übereinstimmt, das Einstellen der momentanen Ladeleistung auf einen Wert, der kleiner als die zweite Nennladeleistung ist, als Reaktion darauf, dass die beobachtete Wechselstromfrequenz unter der Nennsystemfrequenz liegt, und das Einstellen der momentanen Ladeleistung auf einen Wert, der größer als die zweite Nennladeleistung ist, als Reaktion darauf, dass die beobachtete Wechselstromfrequenz die Nennsystemfrequenz überschreitet, definieren; und
wobei die Steuerung (122) angeordnet ist, um den Ziel-SoC-Pegel als einen Durchschnitt des minimal zulässigen SoC-Pegels und des maximal zulässigen SoC-Pegels zu definieren.

**9.** PBR-Vorrichtung (120) nach Anspruch 1,

wobei die eine oder mehrere Regeln zur Anpassung der Ladeleistung für den ersten Betriebsmodus das Einstellen der momentanen Ladeleistung auf die erste Nennladeleistung als Reaktion darauf definieren, dass die beobachtete Wechselstromfrequenz unter einem vordefinierten Frequenzschwellenwert liegt, der höher ist als die Nennsystemfrequenz, und Vergrößern der momentanen Ladeleistung um einen vordefinierten Betrag als Reaktion darauf, dass die beobachtete Wechselstromfrequenz den vordefinierten Frequenzschwellenwert überschreitet;
wobei die eine oder die mehreren Regeln zur Anpassung der Ladeleistung für den ersten Betriebsmodus das Einstellen der momentanen Ladeleistung auf die zweite Nennladeleistung als Reaktion darauf, dass die beobachtete Wechselstromfrequenz im Wesentlichen mit einer Nennsystemfrequenz des Stromnetzes (100) übereinstimmt, das Einstellen der momentanen Ladeleistung auf einen Wert, der kleiner als die zweite Nennladeleistung ist, als Reaktion darauf, dass die beobachtete Wechselstromfrequenz unter der Nennsystemfrequenz liegt, und das Einstellen der momentanen Ladeleistung auf einen Wert, der größer als die zweite Nennladeleistung ist, als Reaktion darauf, dass die beobachtete Wechselstromfrequenz die Nennsystemfrequenz überschreitet, definieren; und
wobei die Steuerung (122) angeordnet ist, um den Ziel-SoC-Pegel als einen Durchschnitt des minimal zulässigen SoC-Pegels und des maximal zulässigen SoC-Pegels zu definieren.

**10.** PBR-Vorrichtung (120) nach Anspruch 1,

wobei die eine oder mehrere Regeln zur Anpassung der Ladeleistung für den ersten Betriebsmodus das Einstellen der momentanen Ladeleistung auf die erste Nennladeleistung als Reaktion darauf definieren, dass die beobachtete Wechselstromfrequenz über einem ersten vordefinierten Frequenzschwellenwert liegt, der niedriger ist als die Nennsystemfrequenz, und das Verringern der momentanen Ladeleistung um einen vordefinierten ersten Betrag als Reaktion darauf, dass die beobachtete Wechselstromfrequenz unter den ersten vordefinierten Frequenzschwellenwert fällt;
wobei die eine oder mehrere Regeln zur Anpassung der Ladeleistung für den zweiten Betriebsmodus das Einstellen der momentanen Ladeleistung auf eine zweite Nennladeleistung als Reaktion darauf definieren, dass die beobachtete Wechselstromfrequenz unter einem zweiten vordefinierten Frequenzschwellenwert liegt, der niedriger ist als die zweite Nennsystemfrequenz, und Vergrößern der momentanen Ladeleistung um einen vordefinierten zweiten Betrag als Reaktion darauf, dass die beobachtete Wechselstromfrequenz den vordefinierten Frequenzschwellenwert überschreitet; und
wobei die Steuerung (122) angeordnet ist, um den Ziel-SOC-Pegel so zu definieren, dass er kleiner oder gleich einem SoC-Pegel ist, der durch Subtraktion einer Impulsenergie, die durch den vordefinierten zweiten Betrag der Veränderung der momentanen Ladeleistung für ein Zeitsegment von vordefinierter Dauer definiert ist, von dem maximal zulässigen SoC-Pegel berechnet wird.

**11.** PBR-Vorrichtung (120) nach Anspruch 10, wobei die Steuerung (122) angeordnet ist, um den Ziel-SoC-Pegel so zu definieren, dass er größer ist als ein Mittelwert der minimal und maximal zulässigen SoC-Pegel.

**12.** PBR-Vorrichtung (120) nach Anspruch 1,

wobei die eine oder mehrere Regeln zur Anpassung der Ladeleistung für den ersten Betriebsmodus das Einstellen der momentanen Ladeleistung auf die erste Nennladeleistung als Reaktion darauf definieren, dass die beobachtete Wechselstromfrequenz unter einem ersten vordefinierten Frequenzschwellenwert liegt, der höher ist als die Nennsystemfrequenz, und Vergrößern der momentanen Ladeleistung um einen vordefinierten ersten Betrag als Reaktion darauf, dass die beobachtete Wechselstromfrequenz den ersten vordefinierten Frequenzschwellenwert überschreitet;
wobei die eine oder mehrere Regeln zur Anpassung der Ladeleistung für den zweiten Betriebsmodus das Einstellen der momentanen Ladeleistung auf eine zweite Nennladeleistung als Reaktion darauf definieren, dass die beobachtete Wechselstromfrequenz über einem zweiten vordefinierten Frequenzschwellenwert liegt, der niedriger ist als die Nennsystemfrequenz, und das Verringern der momentanen Ladeleistung um einen vordefinierten zweiten Betrag als Reaktion darauf, dass die beobachtete Wechselstromfrequenz unter den zweiten vordefinierten Frequenzschwellenwert fällt; und
wobei die Steuerung (122) angeordnet ist, um den Ziel-SoC-Pegel so zu definieren, dass er größer als oder gleich einer Summe des minimal zulässigen SoC-Pegels und einer Impulsenergie ist, die durch den vordefinierten zweiten Betrag der Veränderung der momentanen Ladeleistung für ein Zeitsegment von vordefinierter zweiten Dauer definiert ist.

**13.** PBR-Vorrichtung (120) nach Anspruch 12, wobei die Steuerung (122) angeordnet ist, um den Ziel-SoC-Pegel so zu definieren, dass er kleiner ist als ein Mittelwert der minimal und maximal zulässigen SoC-Pegel.

**14.** PBR-Vorrichtung (120) nach einem der Ansprüche 2 bis 13,

wobei, abhängig von der momentanen Ladeleistung vor einer Veränderung derselben, das Verringern der momentanen Ladeleistung eines der folgenden beinhaltet: Fortsetzen des Ladens mit einer verringerten Rate, Umschalten von Laden auf Entladen, Fortsetzen des Entladens mit einer erhöhten Entladerate; und/oder
wobei, abhängig von der momentanen Ladeleistung vor einer Veränderung derselben, das Erhöhen der momentanen Ladeleistung eines der folgenden beinhaltet: Fortsetzen des Ladens mit einer erhöhten Rate, Umschalten von Entladen auf Laden, Fortsetzen des Entladens mit einer reduzierten Entladerate.

**15.** Verfahren (300) zum Bereitstellen einer Leistungsausgleichsreserve, PBR, für ein Stromnetz (100), wobei das Verfahren (300) umfasst:

Speichern elektrischer Energie in einem Energiespeicher (121), für den ein minimaler SoC-Pegel und ein maximaler SoC-Pegel definiert sind;
Steuern (302) der Übertragung von elektrischer Energie zwischen dem Energiespeicher (121) und dem Stromnetz (100) in Abhängigkeit von einer beobachteten Wechselstromfrequenz des Stromnetzes (100) im Hinblick auf die minimal und maximal zulässigen SoC-Pegel unter Verwendung eines von mehreren Betriebsmodi durch Anpassung einer momentanen Ladeleistung, die die Menge an elektrischer Leistung angibt, die derzeit vom Stromnetz (100) zum Energiespeicher (121) übertragen wird;
**dadurch gekennzeichnet, dass** das Verfahren (300) umfasst: Empfangen (304) vor Beginn einer ersten Zeitspanne jeweilige Angaben zu einem für die erste Zeitspanne ausgewählten ersten Betriebsmodus und einem für eine zweite Zeitspanne ausgewählten zweiten Betriebsmodus, wobei die erste und die zweite Zeitspanne aufeinanderfolgende Zeitspannen in einer Folge von Zeitspannen mit vordefinierter Dauer sind und wobei die zweite Zeitspanne in dieser Folge auf die erste Zeitspanne folgt, und
Steuern (306) der momentanen Ladeleistung während der ersten Zeitspanne in Übereinstimmung mit einer oder mehreren Leistungsanpassungsregeln, die für den ersten Betriebsmodus definiert sind, wobei das Steuer gemäß einem vordefinierten Zeitplan und in Abhängigkeit von der beobachteten Wechselstromfrequenz durchgeführt wird, wobei das Steuern (306) umfasst:

Definieren, vor Beginn der ersten Zeitspanne einen Ziel-Ladezustand-Pegel, SoC-Pegel, des Energiespeichers (121) für das Ende der ersten Zeitspanne zumindest teilweise in Abhängigkeit von dem für die zweite Zeitspanne gewählten zweiten Betriebsmodus;
Ableiten, vor Beginn der ersten Zeitspanne eine erste Nennladeleistung für die erste Zeitspanne zumindest in Abhängigkeit von einem anfänglichen SoC-Pegel des Energiespeichers (121) zu Beginn der ersten Zeitspanne und dem Ziel-SoC-Pegel; und
Steuern, während der ersten Zeitspanne gemäß dem vordefinierten Zeitplan die momentane Ladeleistung während der ersten Zeitspanne im Hinblick auf die erste Nennladeleistung in Übereinstimmung mit einer oder mehreren für den ersten Betriebsmodus definierten Regeln zur Anpassung der Ladeleistung.

**16.** Computerprogramm, das einen computerlesbaren Programmcode zum Bereitstellen einer Leistungsausgleichsreserve, PBR, für ein Stromnetz (100) unter Verwendung einer PBR-Vorrichtung (120) umfasst, die Folgendes umfasst

einen Energiespeicher (121) zum Speichern von elektrischer Energie mit einem dafür definierten minimal zulässigen SoC-Pegel (State of Charge) und einem maximal zulässigen SoC-Pegel; und
eine Steuerung (122) zum Steuern der Übertragung von elektrischer Energie zwischen dem Energiespeicher (121) und dem Stromnetz (100) in Abhängigkeit von einer beobachteten Wechselstromfrequenz des Stromnetzes (100) im Hinblick auf die minimal und maximal zulässigen SoC-Pegel unter Verwendung einen von einer Mehrzahl von Betriebsmodi durch Anpassung einer momentanen Ladeleistung, die die Menge an elektrischer Leistung angibt, die derzeit vom Stromnetz (100) zum Energiespeicher (121) übertragen wird,
**dadurch gekennzeichnet, dass** das Computerprogramm dazu ausgelegt ist, die PBR-Vorrichtung (120) zu veranlassen, das Folgende durchzuführen, wenn der Programmcode auf der Steuerung (122) ausgeführt wird:

vor Beginn einer ersten Zeitspanne jeweilige Angaben zu einem für die erste Zeitspanne ausgewählten ersten Betriebsmodus und einem für eine zweite Zeitspanne ausgewählten zweiten Betriebsmodus zu empfangen, wobei die erste und die zweite Zeitspanne aufeinanderfolgende Zeitspannen in einer Folge von Zeitspannen mit vordefinierter Dauer sind und wobei die zweite Zeitspanne in dieser Folge auf die erste Zeitspanne folgt, und
die momentane Ladeleistung während der ersten Zeitspanne in Übereinstimmung mit einer oder mehreren Leistungsanpassungsregeln zu steuern, die für den ersten Betriebsmodus definiert sind, wobei das Steuer gemäß einem vordefinierten Zeitplan und in Abhängigkeit von der beobachteten Wechselstromfrequenz durchgeführt wird,
wobei das Steuern umfasst:

Definieren, vor Beginn der ersten Zeitspanne einen Ziel-Ladezustand-Pegel, SoC-Pegel, des Energiespeichers (121) für das Ende der ersten Zeitspanne zumindest teilweise in Abhängigkeit von dem für die zweite Zeitspanne gewählten zweiten Betriebsmodus;
Ableiten, vor Beginn der ersten Zeitspanne, einer ersten Nennladeleistung für die erste Zeitspanne zumindest in Abhängigkeit von einem anfänglichen SoC-Pegel des Energiespeichers (121) zu Beginn der ersten Zeitspanne und dem Ziel-SoC-Pegel; und
Steuern, während der ersten Zeitspanne gemäß dem vordefinierten Zeitplan die momentane Ladeleistung während der ersten Zeitspanne im Hinblick auf die erste Nennladeleistung in Übereinstimmung mit einer oder mehreren für den ersten Betriebsmodus definierten Regeln zur Anpassung der Ladeleistung.

## Revendications

**1.** Appareil (120) de réserve d'équilibrage de puissance, PBR, pour un réseau électrique (100), l'appareil PBR (120) comprenant :

un accumulateur d'énergie (121) destiné à stocker de l'énergie électrique, pour lequel un niveau d'état de charge, SoC, minimum admissible et un niveau de SoC maximum admissible sont définis ; et
un contrôleur (122) destiné à commander un transfert d'énergie électrique entre l'accumulateur d'énergie (121) et le réseau électrique (100) en fonction d'une fréquence de courant alternatif observée du réseau électrique (100) compte tenu desdits niveaux de SoC minimum et maximum admissibles selon un d'une pluralité de modes de fonctionnement par ajustement d'une puissance de charge instantanée qui indique la quantité de puissance électrique actuellement transférée du réseau électrique (100) à l'accumulateur d'énergie (121),
**caractérisé en ce que** le contrôleur (122) est agencé pour :

recevoir, avant le début d'une première période de temps, des indications respectives d'un premier mode de fonctionnement sélectionné pour ladite première période de temps et d'un deuxième mode de fonctionnement sélectionné pour une deuxième période de temps, où les première et deuxième période de temps sont des périodes de temps de temps consécutives dans une séquence de périodes de temps de durée prédéfinie et où la deuxième période de temps suit la première période de temps dans ladite séquence, et

commander la puissance de charge instantanée durant la première période de temps conformément à une ou plusieurs règles de réglage de puissance définies pour le premier mode de fonctionnement, dans lequel ladite commande est réalisée conformément à un calendrier prédéfini et en fonction de la fréquence de courant alternatif observée,

dans lequel le contrôleur (122) est agencé pour :

définir, avant le début de la première période de temps, un niveau d'état de charge, SoC, cible de l'accumulateur d'énergie (121) pour la fin de la première période de temps, au moins partiellement en fonction du deuxième mode de fonctionnement sélectionné pour la deuxième période de temps ;

dériver, avant le début de la première période de temps, une première puissance de charge nominale pour la première période de temps au moins en fonction d'un niveau de SoC initial de l'accumulateur d'énergie (121) au début de la première période de temps et dudit niveau de SoC cible ; et

commander, durant la première période de temps conformément audit calendrier prédéfini, la puissance de charge instantanée durant la première période de temps en vue de la première puissance de charge nominale conformément aux une ou plusieurs règles de réglage de puissance de charge définies pour le premier mode de fonctionnement.

**2.** Appareil de réserve d'équilibrage de puissance (120) selon la revendication 1,

dans lequel lesdites une ou plusieurs règles de réglage de puissance de charge pour le premier mode de fonctionnement définissent un réglage de la puissance de charge instantanée à la première puissance de charge nominale en réponse au fait que la fréquence de courant alternatif observée correspond sensiblement à une fréquence de système nominale du réseau électrique (100), un réglage de la puissance de charge instantanée à une valeur inférieure à la première puissance de charge nominale en réponse au fait que la fréquence de courant alternatif observée est inférieure à la fréquence de système nominale, et un réglage de la puissance de charge instantanée à une valeur supérieure à la première puissance de charge nominale en réponse au fait que la fréquence de courant alternatif observée dépasse la fréquence de système nominale ;

dans lequel lesdites une ou plusieurs règles de réglage de puissance de charge pour le deuxième mode de fonctionnement définissent un réglage de la puissance de charge instantanée à une deuxième puissance de charge nominale en réponse au fait que la fréquence de courant alternatif observée est supérieure à un seuil de fréquence prédéfini qui est inférieur à la fréquence de système nominale et une diminution de la puissance de charge instantanée par une quantité prédéfinie en réponse au fait que la fréquence de courant alternatif observée tombe en dessous dudit seuil de fréquence prédéfini ; et

dans lequel le contrôleur (122) est agencé pour définir ledit niveau de SoC cible de telle sorte qu'il soit supérieur ou égal à une somme dudit niveau de SoC minimum admissible et d'une énergie d'impulsion définie par ladite quantité prédéfinie de variation de la puissance de charge instantanée pour un segment de temps d'une durée prédéfinie.

**3.** Appareil de réserve d'équilibrage de puissance (120) selon la revendication 2, dans lequel le contrôleur (122) est agencé pour définir ledit niveau de SoC cible de telle sorte qu'il soit inférieur à une moyenne desdits niveaux de SoC minimum et maximum admissibles.

**4.** Appareil de réserve d'équilibrage de puissance (120) selon la revendication 1,

dans lequel lesdites une ou plusieurs règles de réglage de puissance de charge pour le premier mode de fonctionnement définissent un réglage de la puissance de charge instantanée à la première puissance de charge nominale en réponse au fait que la fréquence de courant alternatif observée correspond sensiblement à une fréquence de système nominale du réseau électrique (100), un réglage de la puissance de charge instantanée à une valeur inférieure à la première puissance de charge nominale en réponse au fait que la fréquence de courant alternatif observée est inférieure à la fréquence de système nominale, et un réglage de la puissance de charge instantanée à une valeur supérieure à la première puissance de charge nominale en réponse au fait que la fréquence de courant alternatif observée dépasse la fréquence de système nominale ;

dans lequel lesdites une ou plusieurs règles de réglage de puissance de charge pour le deuxième mode de fonctionnement définissent un réglage de la puissance de charge instantanée à une deuxième puissance de charge nominale en réponse au fait que la fréquence de courant alternatif observée est inférieure à un seuil de fréquence prédéfini supérieur à la fréquence de système nominale et une augmentation de la puissance de charge instantanée par une quantité prédéfinie en réponse au fait que la fréquence de courant alternatif observée dépasse ledit seuil de fréquence prédéfini ; et

dans lequel le contrôleur (122) est agencé pour définir ledit niveau de SoC cible de telle sorte qu'il soit inférieur ou égal à un niveau de SoC calculé en soustrayant une énergie d'impulsion définie par ladite quantité prédéfinie de variation de la puissance de charge instantanée pour un segment de temps d'une durée prédéfinie dudit niveau de SoC maximum admissible.

**5.** Appareil de réserve d'équilibrage de puissance (120) selon la revendication 4, dans lequel le contrôleur (122) est agencé pour définir ledit niveau de SoC cible de telle sorte qu'il soit supérieur à une moyenne desdits niveaux de SoC minimum et maximum admissibles.

**6.** Appareil de réserve d'équilibrage de puissance (120) selon l'une quelconque des revendications 1 à 5, dans lequel le contrôleur (122) est agencé pour dériver la première puissance de charge nominale en fonction d'une énergie d'équilibrage estimée requise pour la première période de temps, ladite énergie d'équilibrage estimée étant dérivée en fonction de la fréquence de courant alternatif prédite dans la première période de temps, dans lequel la fréquence de courant alternatif prédite est dérivée en fonction de valeurs passées de la fréquence de courant alternatif observée.

**7.** Appareil de réserve d'équilibrage de puissance (120) selon la revendication 6, dans lequel le contrôleur (122) est agencé pour dériver la première puissance de charge nominale de l'une des manières suivantes :

par calcul d'une différence entre le niveau de SoC cible et le niveau de SoC initial et calcul de la première puissance de charge nominale en divisant une somme de ladite différence et de l'énergie d'équilibrage estimée par la durée de la première période de temps ;

par calcul d'un niveau de SoC cible ajusté comme une somme du niveau de SoC cible et de l'énergie d'équilibrage estimée et calcul de la première puissance de charge nominale en divisant une différence entre le niveau de SoC cible ajusté et le niveau de SoC initial par la durée de la période de temps.

**8.** Appareil de réserve d'équilibrage de puissance (120) selon la revendication 1,

dans lequel lesdites une ou plusieurs règles de réglage de puissance de charge pour le premier mode de fonctionnement définissent un réglage de la puissance de charge instantanée à la première puissance de charge nominale en réponse au fait que la fréquence de courant alternatif observée est supérieure à un seuil de fréquence prédéfini qui est inférieur à la fréquence de système nominale et une diminution de la puissance de charge instantanée par une quantité prédéfinie en réponse au fait que la fréquence de courant alternatif observée tombe en dessous dudit seuil de fréquence prédéfini ;

dans lequel lesdites une ou plusieurs règles de réglage de puissance de charge pour le deuxième mode de fonctionnement définissent un réglage de la puissance de charge instantanée à une deuxième puissance de charge nominale en réponse au fait que la fréquence de courant alternatif observée correspond sensiblement à une fréquence de système nominale du réseau électrique (100), un réglage de la puissance de charge instantanée à une valeur inférieure à la deuxième puissance de charge nominale en réponse au fait que la fréquence de courant alternatif observée est inférieure à la fréquence de système nominale, et un réglage de la puissance de charge instantanée à une valeur supérieure à la deuxième puissance de charge nominale en réponse au fait que la fréquence de courant alternatif observée dépasse la fréquence de système nominale ; et

dans lequel le contrôleur (122) est agencé pour définir ledit niveau de SoC cible comme une moyenne du niveau de SoC minimum admissible et du niveau de SoC maximum admissible.

**9.** Appareil de réserve d'équilibrage de puissance (120) selon la revendication 1,

dans lequel lesdites une ou plusieurs règles de réglage de puissance de charge pour le premier mode de fonctionnement définissent un réglage de la puissance de charge instantanée à la première puissance de charge nominale en réponse au fait que la fréquence de courant alternatif observée est inférieure à un seuil de fréquence prédéfini supérieur à la fréquence de système nominale et une augmentation de la puissance de charge instantanée par une quantité prédéfinie en réponse au fait que la fréquence de courant alternatif observée dépasse ledit seuil de fréquence prédéfini ;
dans lequel lesdites une ou plusieurs règles de réglage de puissance de charge pour le deuxième mode de fonctionnement définissent un réglage de la puissance de charge instantanée à une deuxième puissance de charge nominale en réponse au fait que la fréquence de courant alternatif observée correspond sensiblement à une fréquence de système nominale du réseau électrique (100), un réglage de la puissance de charge instantanée à une valeur inférieure à la deuxième puissance de charge nominale en réponse au fait que la fréquence de courant alternatif observée est inférieure à la fréquence de système nominale, et un réglage de la puissance de charge instantanée à une valeur supérieure à la deuxième puissance de charge nominale en réponse au fait que la fréquence de courant alternatif observée dépasse la fréquence de système nominale ; et
dans lequel le contrôleur (122) est agencé pour définir ledit niveau de SoC cible comme une moyenne du niveau de SoC minimum admissible et du niveau de SoC maximum admissible.

**10.** Appareil de réserve d'équilibrage de puissance (120) selon la revendication 1,

dans lequel lesdites une ou plusieurs règles de réglage de puissance de charge pour le premier mode de fonctionnement définissent un réglage de la puissance de charge instantanée à la première puissance de charge nominale en réponse au fait que la fréquence de courant alternatif observée est supérieure à un premier seuil de fréquence prédéfini qui est inférieur à la fréquence de système nominale et une diminution de la puissance de charge instantanée par une première quantité prédéfinie en réponse au fait que la fréquence de courant alternatif observée tombe en dessous dudit premier seuil de fréquence prédéfini ;
dans lequel lesdites une ou plusieurs règles de réglage de puissance de charge pour le deuxième mode de fonctionnement définissent un réglage de la puissance de charge instantanée à une deuxième puissance de charge nominale en réponse au fait que la fréquence de courant alternatif observée est inférieure à un deuxième seuil de fréquence prédéfini supérieur à la fréquence de système nominale et une augmentation de la puissance de charge instantanée par une deuxième quantité prédéfinie en réponse au fait que la fréquence de courant alternatif observée dépasse ledit deuxième seuil de fréquence prédéfini ; et
dans lequel le contrôleur (122) est agencé pour définir ledit niveau de SoC cible de telle sorte qu'il soit inférieur ou égal à un niveau de SoC calculé en soustrayant une énergie d'impulsion définie par ladite deuxième quantité prédéfinie de variation de la puissance de charge instantanée pour un segment de temps d'une durée prédéfinie dudit niveau de SoC maximum admissible.

**11.** Appareil de réserve d'équilibrage de puissance (120) selon la revendication 10, dans lequel le contrôleur (122) est agencé pour définir ledit niveau de SoC cible de telle sorte qu'il soit supérieur à une moyenne desdits niveaux de SoC minimum et maximum admissibles.

**12.** Appareil de réserve d'équilibrage de puissance (120) selon la revendication 1,

dans lequel lesdites une ou plusieurs règles de réglage de puissance de charge pour le premier mode de fonctionnement définissent un réglage de la puissance de charge instantanée à la première puissance de charge nominale en réponse au fait que la fréquence de courant alternatif observée est inférieure à un premier seuil de fréquence prédéfini qui est supérieur à la fréquence de système nominale et une augmentation de la puissance de charge instantanée par une première quantité prédéfinie en réponse au fait que la fréquence de courant alternatif observée dépasse ledit premier seuil de fréquence prédéfini ;
dans lequel lesdites une ou plusieurs règles de réglage de puissance de charge pour le deuxième mode de fonctionnement définissent un réglage de la puissance de charge instantanée à une deuxième puissance de charge nominale en réponse au fait que la fréquence de courant alternatif observée est supérieure à un deuxième seuil de fréquence prédéfini qui est inférieur à la fréquence de système nominale et une diminution de la puissance de charge instantanée par une deuxième quantité prédéfinie en réponse au fait que la fréquence de courant alternatif observée tombe en dessous dudit deuxième seuil de fréquence prédéfini ; et
dans lequel le contrôleur (122) est agencé pour définir ledit niveau de SoC cible de telle sorte qu'il soit supérieur ou égal à une somme dudit niveau de SoC minimum admissible et d'une énergie d'impulsion définie par ladite deuxième quantité prédéfinie de variation de la puissance de charge instantanée pour un segment de temps d'une deuxième durée prédéfinie.

**13.** Appareil de réserve d'équilibrage de puissance (120) selon la revendication 12, dans lequel le contrôleur (122) est agencé pour définir ledit niveau de SoC cible de telle sorte qu'il soit inférieur à une moyenne desdits niveaux de SoC minimum et maximum admissibles.

**14.** Appareil de réserve d'équilibrage de puissance (120) selon l'une quelconque des revendications 2 à 13,

dans lequel, en fonction de la puissance de charge instantanée avant un changement de celle-ci, une diminution de la puissance de charge instantanée comporte l'une des actions suivantes : une continuation de la charge à une vitesse réduite, un basculement de la charge sur une décharge, une continuation de la décharge à une vitesse de décharge accrue ; et/ou

dans lequel, en fonction de la puissance de charge instantanée avant un changement de celle-ci, une augmentation de la puissance de charge instantanée comporte l'une des actions suivantes : une continuation de la charge à une vitesse accrue, un basculement de la décharge sur une charge, une continuation de la décharge à une vitesse de décharge réduite.

**15.** Procédé (300) de fourniture d'une réserve d'équilibrage de puissance, PBR, pour un réseau électrique (100), le procédé (300) comprenant :

le stockage d'énergie électrique dans un accumulateur d'énergie (121) pour lequel sont définis un niveau d'état de charge, SoC, minimum et un niveau de SoC maximum ;

la commande (302) d'un transfert d'énergie électrique entre l'accumulateur d'énergie (121) et le réseau électrique (100) en fonction d'une fréquence de courant alternatif observée du réseau électrique (100) compte tenu desdits niveaux de SoC minimum et maximum admissibles à l'aide d'un d'une pluralité de modes de fonctionnement par l'ajustement d'une puissance de charge instantanée qui indique la quantité de puissance électrique actuellement transférée du réseau électrique (100) à l'accumulateur d'énergie (121) ;

**caractérisé en ce que** le procédé (300) comprend :

la réception (304), avant le début d'une première période de temps, d'indications respectives d'un premier mode de fonctionnement sélectionné pour une première période de temps et d'un deuxième mode de fonctionnement sélectionné pour une deuxième période de temps, où les première et deuxième périodes de temps sont des périodes de temps consécutives dans une séquence de périodes de temps et où la deuxième période de temps suit la première période de temps dans ladite séquence ; et

la commande (306) de la puissance de charge instantanée durant la première période de temps conformément à une ou plusieurs règles de réglage de puissance définies pour le premier mode de fonctionnement, dans lequel ladite commande est réalisée conformément à un calendrier prédéfini et en fonction de la fréquence de courant alternatif observée,

dans lequel le contrôleur (122) est agencé pour :

définir, avant le début de la première période de temps, un niveau d'état de charge, SoC, cible de l'accumulateur d'énergie (121) pour la fin de la première période de temps, au moins partiellement en fonction du deuxième mode de fonctionnement sélectionné pour la deuxième période de temps ;

dériver, avant le début de la première période de temps, une première puissance de charge nominale pour la première période de temps au moins en fonction d'un niveau de SoC initial de l'accumulateur d'énergie (121) au début de la première période de temps et dudit niveau de SoC cible ; et

commander, durant la première période de temps conformément audit calendrier prédéfini, la puissance de charge instantanée durant la première période de temps en vue de la première puissance de charge nominale conformément aux une ou plusieurs règles de réglage de la puissance de charge définies pour le premier mode de fonctionnement.

**16.** Programme d'ordinateur comprenant un code de programme lisible par ordinateur pour fournir une réserve d'équilibrage de puissance, PBR, pour un réseau électrique (100) à l'aide d'un appareil de réserve d'équilibrage de puissance (120) qui comprend

un accumulateur d'énergie (121) pour stocker de l'énergie électrique, pour lequel un niveau d'état de charge, SoC, admissible minimum et un niveau de SoC admissible maximum sont définis ; et

un contrôleur (122) pour commander un transfert d'énergie électrique entre l'accumulateur d'énergie (121) et le réseau électrique (100) en fonction d'une fréquence de courant alternatif observée du réseau électrique (100) compte tenu desdits niveaux de SoC minimum et maximum selon un d'une pluralité de modes de fonctionnement par ajustement d'une puissance de charge instantanée qui indique la quantité de puissance électrique actuellement transférée du réseau électrique (100) à l'accumulateur d'énergie (121),

**caractérisé en ce que** le programme d'ordinateur est configuré pour amener l'appareil de réserve d'équilibrage de puissance (120) à entreprendre les opérations suivantes, lorsque ledit code de programme est exécuté sur ledit contrôleur (122) :

la réception, avant le début d'une première période de temps, d'indications respectives d'un premier mode de fonctionnement sélectionné pour ladite première période de temps et d'un deuxième mode de fonctionnement sélectionné pour une deuxième période de temps, où les première et deuxième périodes de temps sont des périodes de temps consécutives dans une séquence de périodes de temps d'une durée prédéfinie et où la deuxième période de temps suit la première période de temps dans ladite séquence, et

la commande de la puissance de charge instantanée durant la première période de temps conformément à une ou plusieurs règles de réglage de puissance définies pour le premier mode de fonctionnement, dans lequel ladite commande est réalisée conformément à un calendrier prédéfini et en fonction de la fréquence de courant alternatif observée,

dans lequel ladite commande comprend :

la définition, avant le début de la première période de temps, d'un niveau d'état de charge, SoC, cible de l'accumulateur d'énergie (121) pour la fin de la première période de temps, au moins partiellement en fonction du deuxième mode de fonctionnement sélectionné pour la deuxième période de temps ;

la dérivée, avant le début de la première période de temps, d'une première puissance de charge nominale pour la première période de temps au moins en fonction d'un niveau de SCO initial de l'accumulateur d'énergie (121) au début de la première période de temps et dudit niveau de SoC cible ; et

la commande, durant la première période de temps conformément audit calendrier prédéfini, de la puissance de charge instantanée durant la première période de temps en vue de la première puissance de charge nominale conformément aux une ou plusieurs règles de réglage de la puissance de charge définies pour le premier mode de fonctionnement.

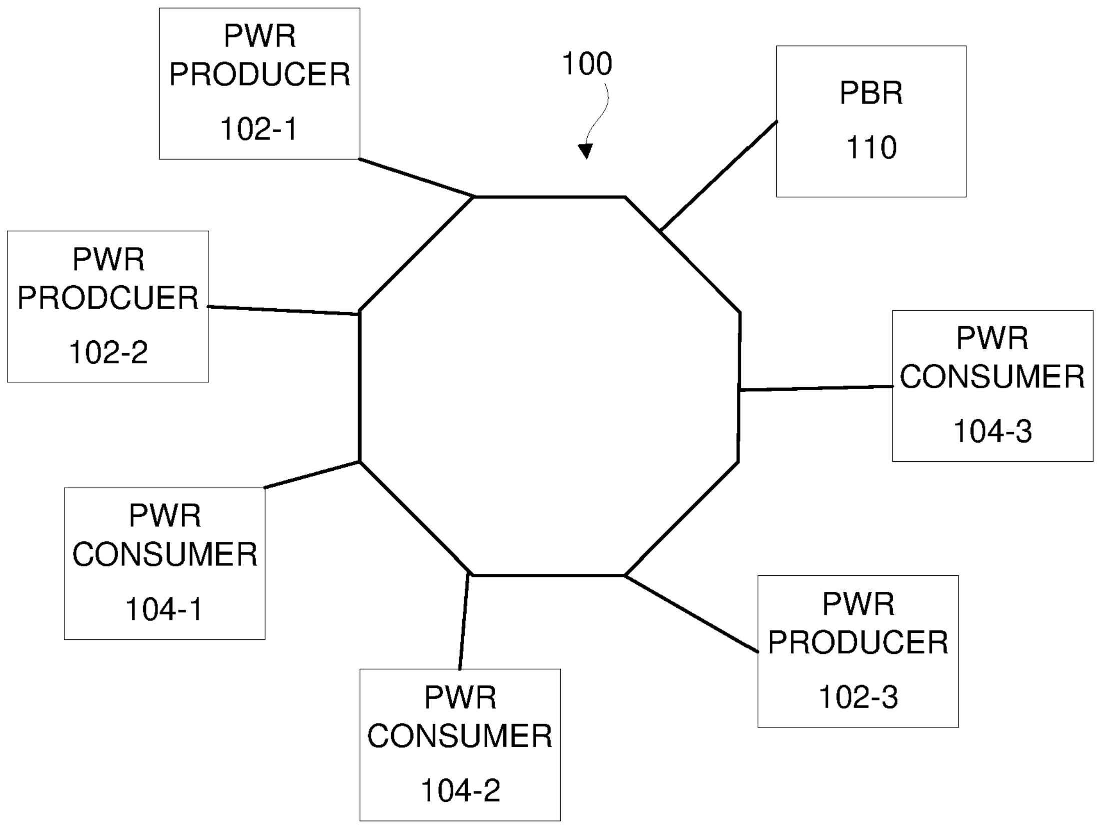


Figure 1

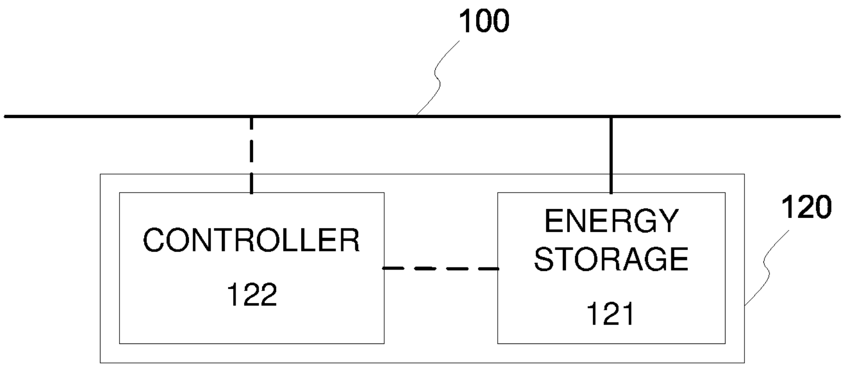


Figure 2

200

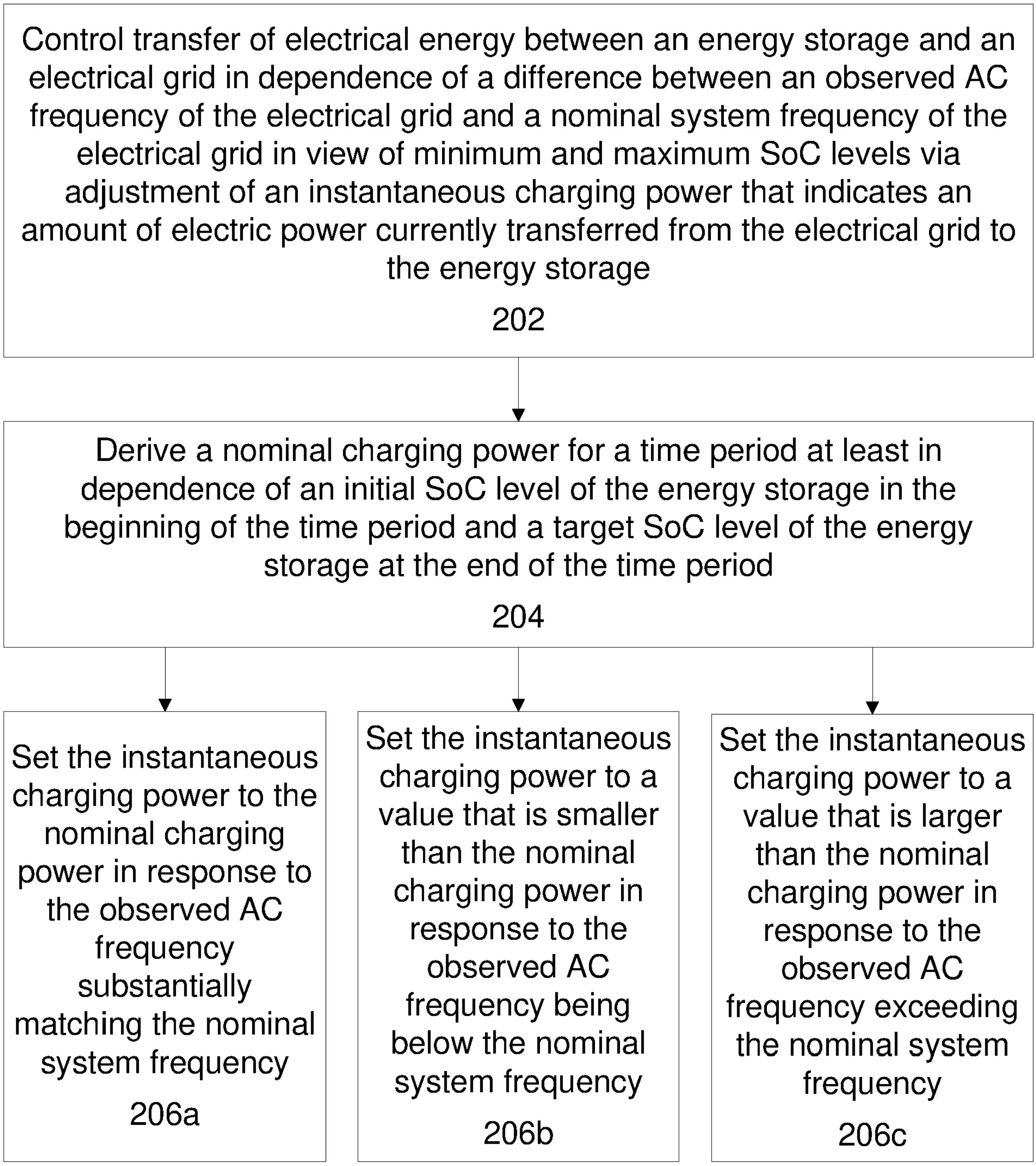
Control transfer of electrical energy between an energy storage and an electrical grid in dependence of a difference between an observed AC frequency of the electrical grid and a nominal system frequency of the electrical grid in view of minimum and maximum SoC levels via adjustment of an instantaneous charging power that indicates an amount of electric power currently transferred from the electrical grid to the energy storage
202
Derive a nominal charging power for a time period at least in dependence of an initial SoC level of the energy storage in the beginning of the time period and a target SoC level of the energy storage at the end of the time period
204
Set the instantaneous charging power to the nominal charging power in response to the observed AC frequency substantially matching the nominal system frequency
206a
Set the instantaneous charging power to a value that is smaller than the nominal charging power in response to the observed AC frequency being below the nominal system frequency
206b
Set the instantaneous charging power to a value that is larger than the nominal charging power in response to the observed AC frequency exceeding the nominal system frequency
206c

Figure 3

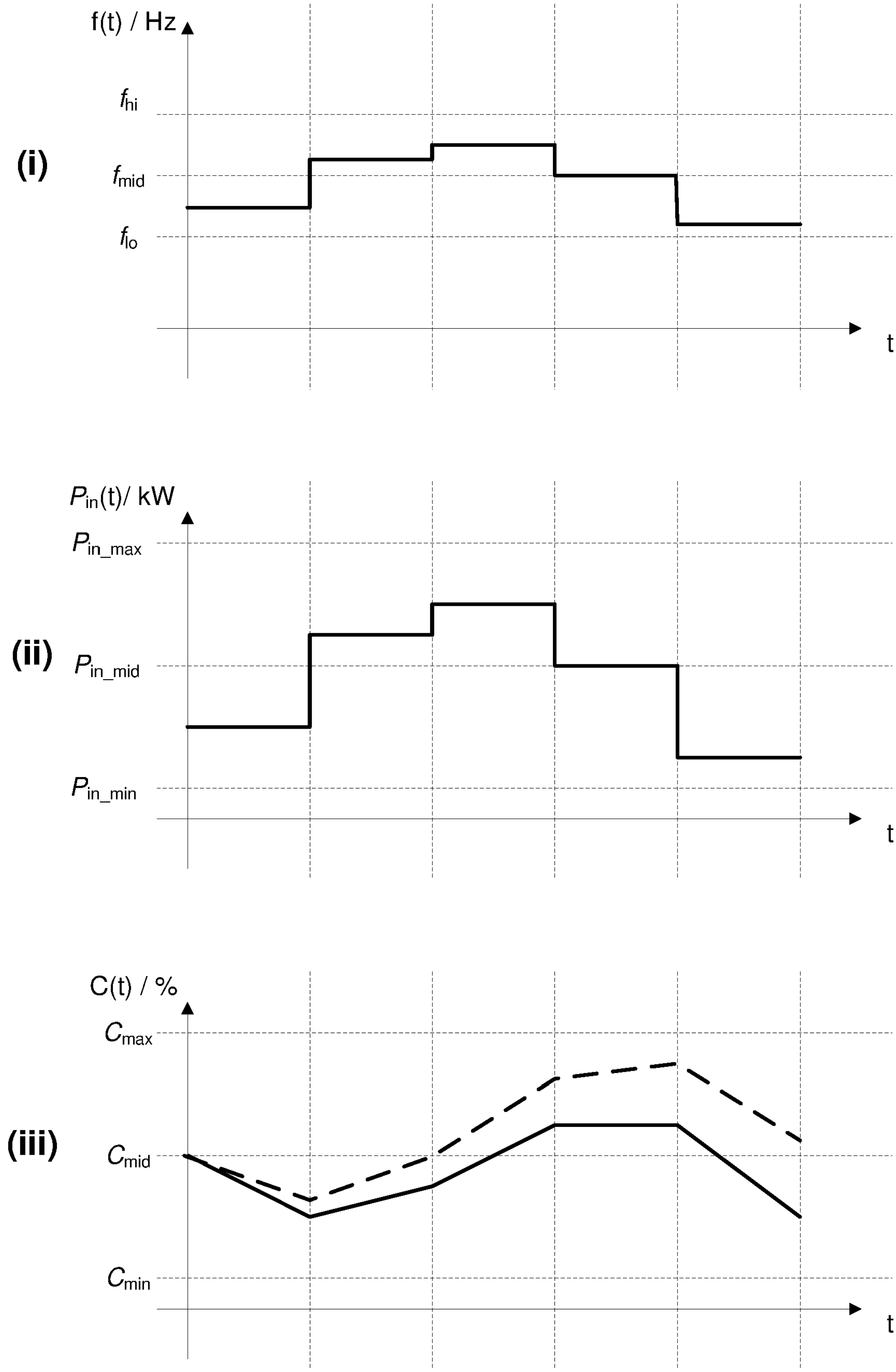
(i)
f(t) / Hz
fhi
fmid
flo
t
(ii)
Pin(t)/ kW
Pin_max
Pin_mid
Pin_min
t
(iii)
C(t) / %
Cmax
Cmid
Cmin
t

Figure 4A

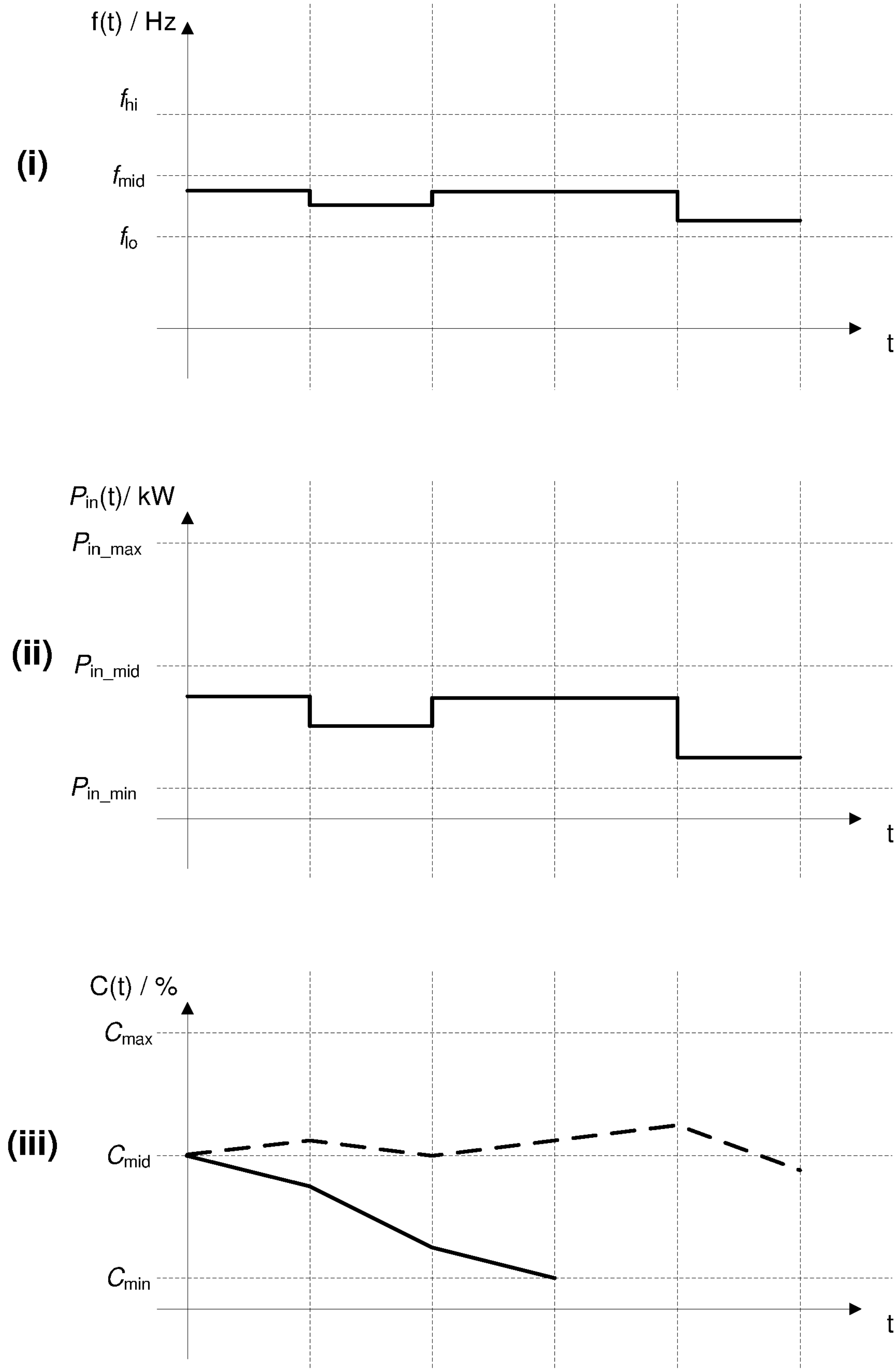
(i)
f(t) / Hz
fhi
fmid
flo
t
(ii)
Pin(t)/ kW
Pin_max
Pin_mid
Pin_min
t
(iii)
C(t) / %
Cmax
Cmid
Cmin
t

Figure 4B

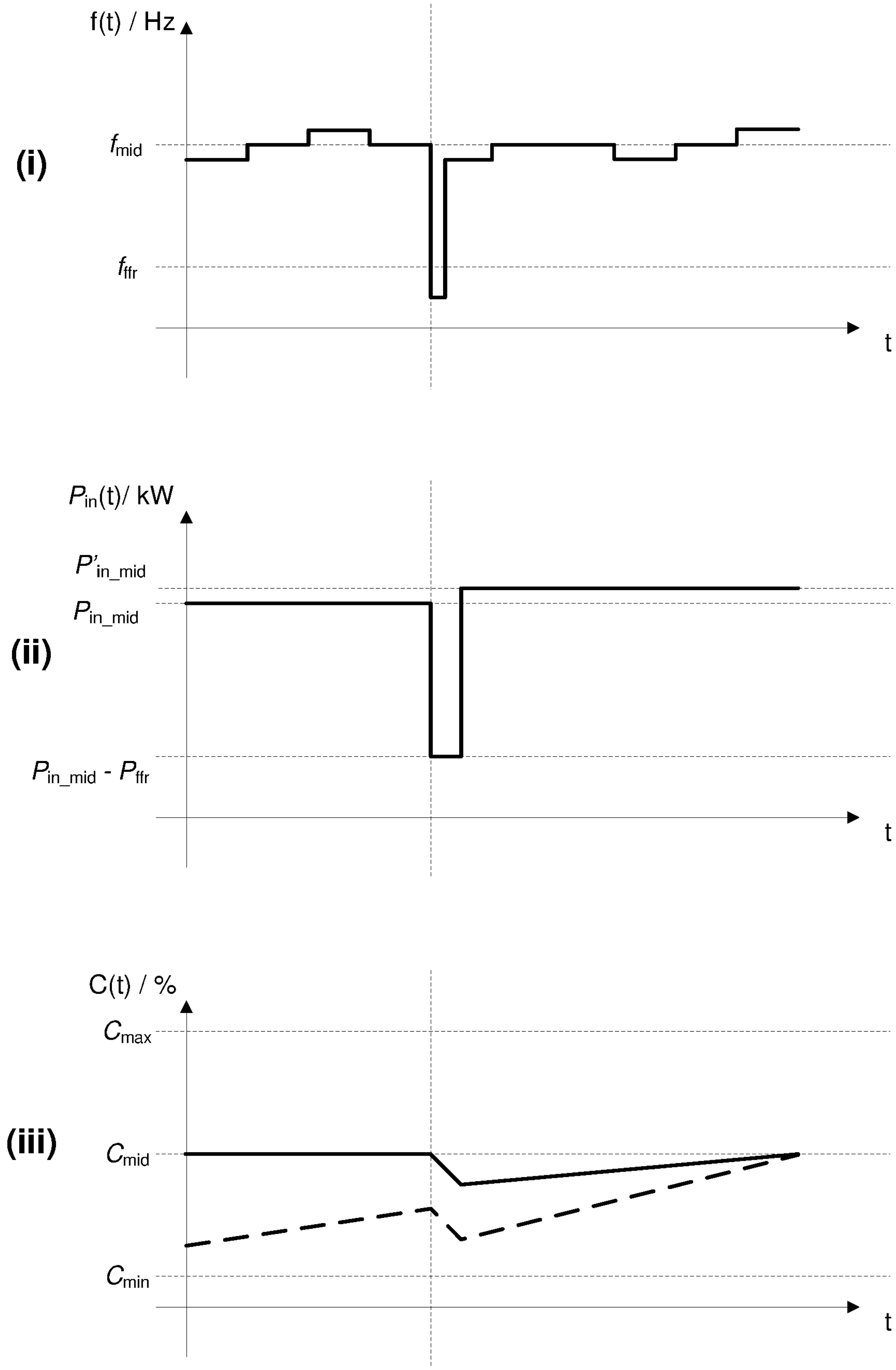
(i)
f(t) / Hz
$f_{mid}$
$f_{ffr}$
t
(ii)
$P_{in}$(t)/ kW
$P'_{in_mid}$
$P_{in_mid}$
$P_{in_mid}$ - $P_{ffr}$
t
(iii)
C(t) / %
$C_{max}$
$C_{mid}$
$C_{min}$
t

Figure 5

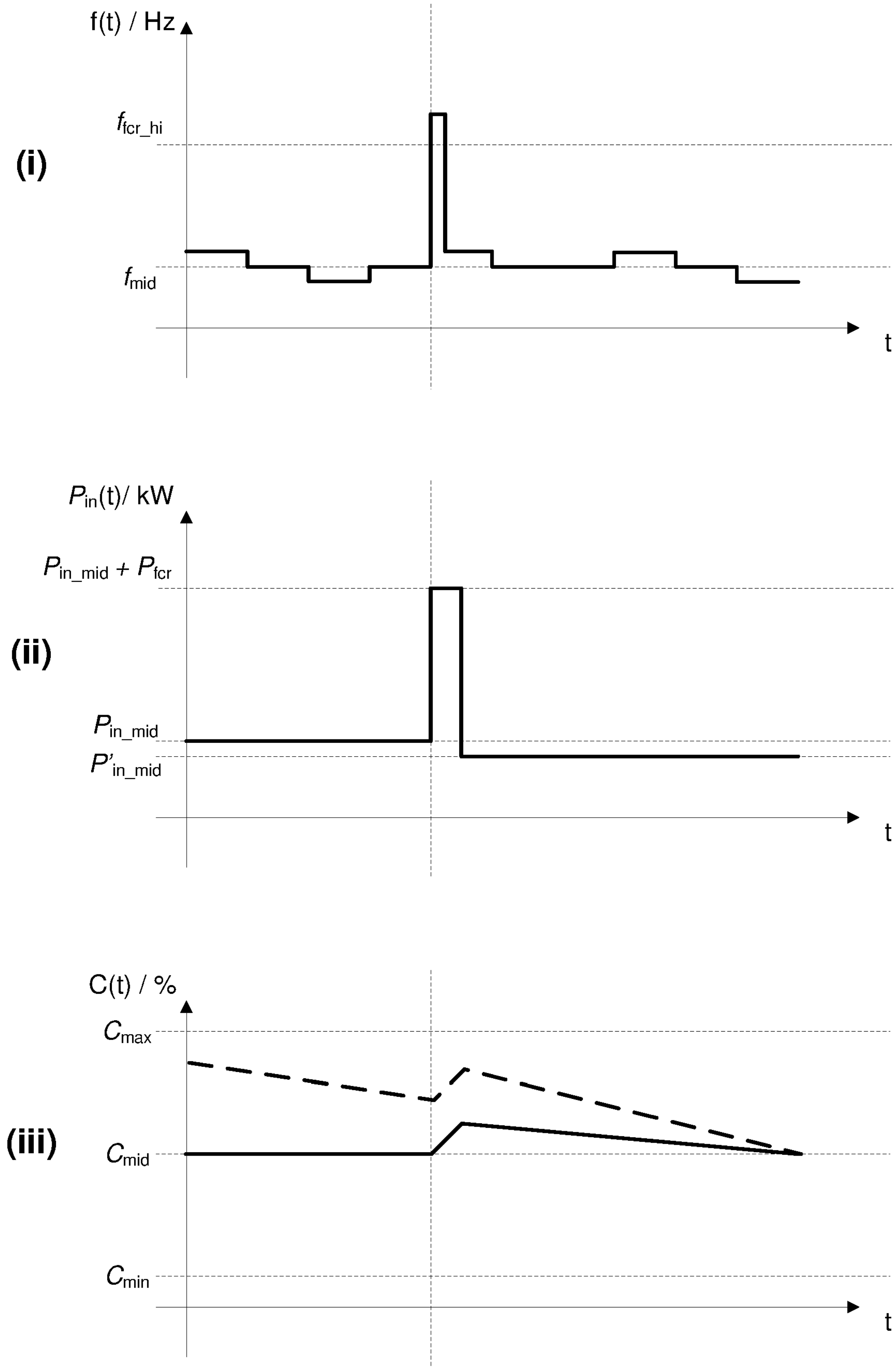

(i)
f(t) / Hz
f_fcr_hi
f_mid
t
(ii)
P_in(t)/ kW
P_in_mid + P_fcr
P_in_mid
P'_in_mid
t
(iii)
C(t) / %
C_max
C_mid
C_min
t


Figure 6

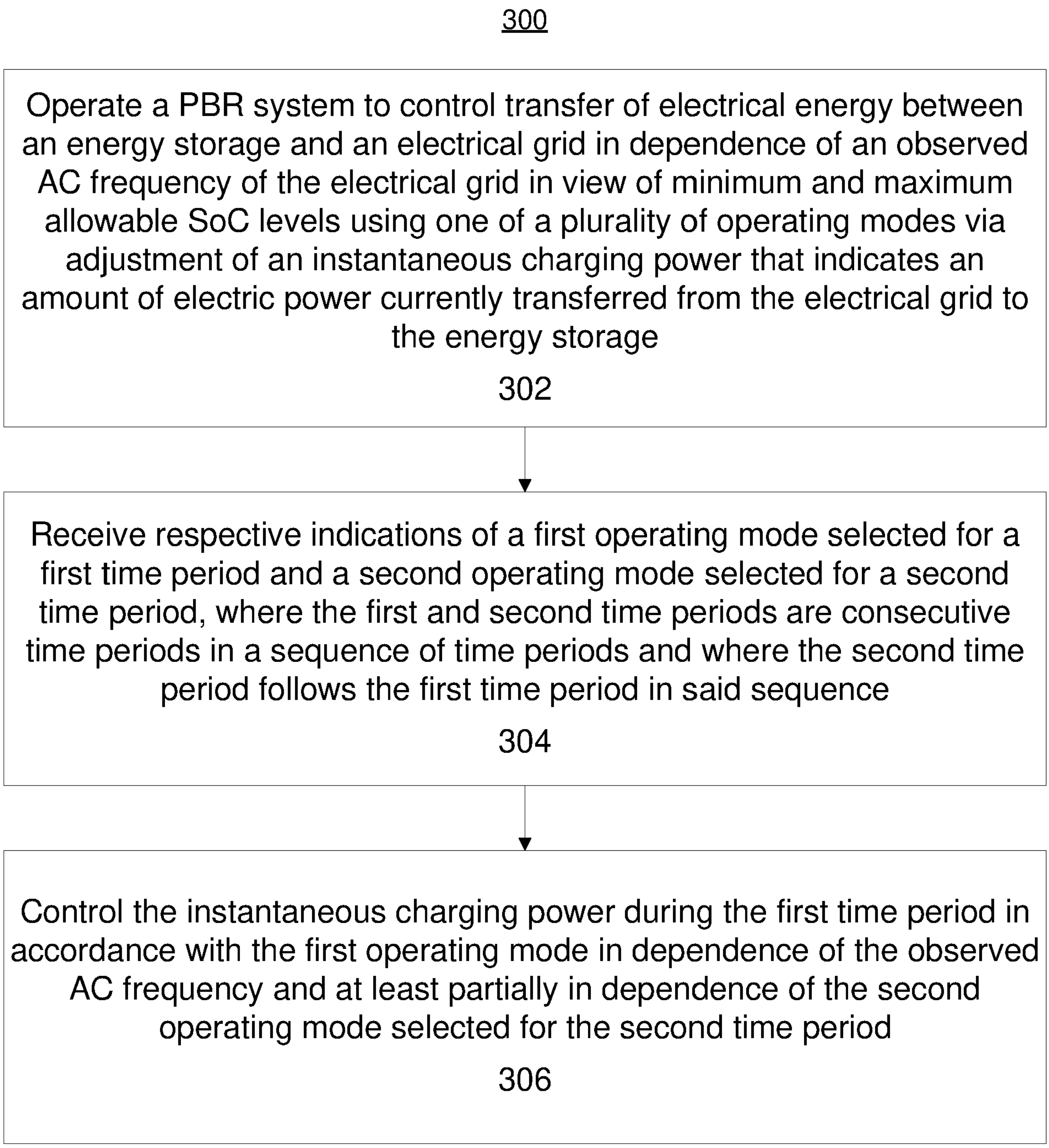
300
Operate a PBR system to control transfer of electrical energy between an energy storage and an electrical grid in dependence of an observed AC frequency of the electrical grid in view of minimum and maximum allowable SoC levels using one of a plurality of operating modes via adjustment of an instantaneous charging power that indicates an amount of electric power currently transferred from the electrical grid to the energy storage
302
Receive respective indications of a first operating mode selected for a first time period and a second operating mode selected for a second time period, where the first and second time periods are consecutive time periods in a sequence of time periods and where the second time period follows the first time period in said sequence
304
Control the instantaneous charging power during the first time period in accordance with the first operating mode in dependence of the observed AC frequency and at least partially in dependence of the second operating mode selected for the second time period
306

Figure 7

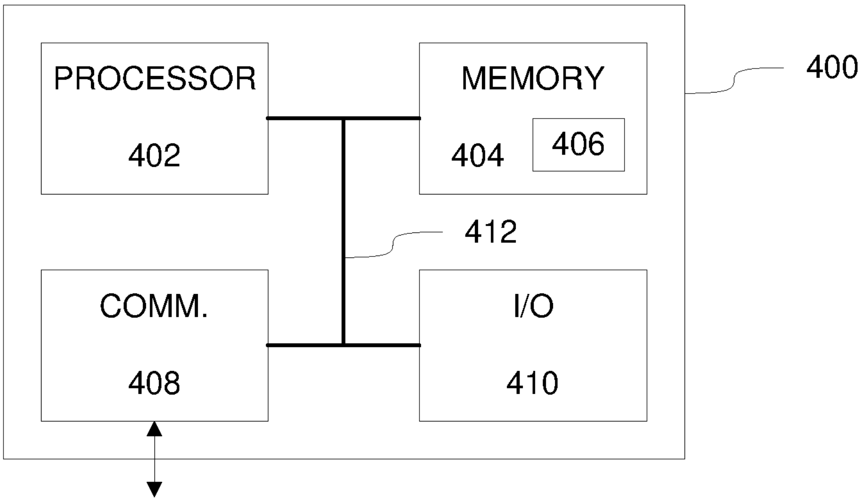


Figure 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **HOLLINGER ; RAPHAEL et al.** Fast Frequency Response with BESS: A Comparative Analysis of Germany, Great Britain and Sweden. *15th IEEE International Conference on the European Energy Market (EEM),* 27 June 2018, 1-6